# FASCICULE DE BREVET EUROPEEN

(11) **EP 2 098 365 B1**
(45) Date de publication et mention de la délivrance du brevet: **25.05.2011**
(21) Numéro de dépôt: 09153913.0
(22) Date de dépôt: 27.02.2009
(51) Int. Cl.: B32B 27/34, B32B 1/08, C08K 3/00, F16L 11/04, C10L 1/02

(54) **Structure multicouche en polyamide comprenant une couche stabilisée avec un stabilisant organique et une couche stabilisée avec un stabilisant à base de cuivre**
Mehrschichtgebilde aus Polyamide, enthaltend eine Schicht stabilisiert mit einem organischen Stabilisator und mindestens eine Schicht stabilisiert mit einem Stabilisator auf Grundlage von Kupfer
Multilayer polyamide structure comprising one layer stabilised with an organic stabiliser and one layer stabilised with a copper-based stabiliser.

(30) Priorité: 03.03.2008 FR 0851380
(43) Date de publication de la demande: 09.09.2009
(73) Titulaire: ARKEMA FRANCE, 92700 Colombes (FR)
(72) Inventeur: Ferreiro, Vincent, 27180, SAINT-SEBASTIEN DE MORSENT (FR); Montanari, Thibaut, 27300, MENNEVAL (FR); Montezin, Fabrice, 27230, SAINT AUBIN DE SCELLON (FR)
(74) Mandataire: Dossmann, Gérard

(56) Documents cités:
- EP-A- 1 162 061
- EP-A- 1 243 831
- EP-A- 1 531 174
- EP-A- 1 741 549
- WO-A-00/59706
- WO-A-2007/079765
- WO-A-2007/082924
- DE-A1- 19 847 627
- US-A- 5 316 713
- US-A1- 2007 113 467
- US-A1- 2007 196 605

## Description

L'invention se rapporte à une structure multicouche comprenant au moins deux couches, l'une comprenant au moins un polymère et ne comprenant pas de cuivre, et l'autre comprenant au moins un polymère et au moins un stabilisant à base de cuivre

L'invention se rapporte également à un tube comprenant une telle structure multicouche ainsi qu'à son utilisation pour le transport ou le stockage de fluides.

Dans le domaine de l'automobile, et des transports en général, la composition des carburants est en constante évolution, notamment pour des raisons écologiques, ce qui se traduit par l'arrivée progressive des bio-carburants sur le marché. Ces carburants sont plus agressifs. Par conséquent, il s'avère indispensable d'améliorer la qualité des pièces thermoplastiques en contact avec ces nouveaux carburants.

Il est important d'augmenter la résistance au vieillissement thermique (autrement dit la résistance à l'oxydation dans l'air chaud) de ces pièces, car la température de l'air environnant le moteur est en hausse pour des raisons de rendement et de bruit. C'est notamment le cas des moteurs diesels à injection directe à rampe commune. Dans le cas de tubes thermoplastiques à base de polyamides véhiculant le carburant, la face externe est au contact de l'air chaud et la face interne au contact des nouveaux bio-carburants, en particulier le bio-diesel.

Ces nouveaux bio-carburants et bio-diesels sont beaucoup plus agressifs que les carburants fossiles traditionnels. La température externe plus élevée tendra à augmenter la température du carburant, rendant ce dernier encore plus agressif vis à vis du thermoplastique polyamide. La résistance au vieillissement face aux carburants doit donc être améliorée. Les bio-carburants, et en particulier le bio-diesel, deviennent plus agressifs, notamment du fait de la présence croissante d'une proportion de dérivés polaires d'origine non fossile. Ces bio-carburants, sous l'effet de températures plus élevées, sont particulièrement sensibles à l'oxydation et à la dégradation. Il en résulte typiquement la formation de peroxydes, qui se décomposent en radicaux libres, qui eux-mêmes agressent la matière polymère de la pièce automobile en contact avec ledit carburant (par exemple les tuyaux polyamides d'alimentation ou d'évacuation de carburant).

Plus particulièrement, les bio-diesels comportant des esters d'acide gras insaturés sont très sensibles à cette oxydation. Le bio-diesel peut contenir typiquement entre 5 et 30% d'ester gras (30% pour le bio-diesel dit B30). Les tests de qualification des constructeurs sont parfois réalisés dans du B100, c'est-à-dire du bio-diesel constitué de 100% d'ester gras. Ces esters gras dérivent d'huiles, en particulier d'huiles végétales de colza (appelé RME), de soja (appelé SME), de palme.

Ces préoccupations visent notamment, de manière non limitative, les structures se présentant sous la forme de tubes utilisés pour la circulation des carburants ou d'autres liquides agressifs tels les liquides de refroidissement, les pièces situées à proximité du moteur ou encore les structures telles que des réservoir.

Pour améliorer la résistance au vieillissement thermique de telles structures, ces dernières sont généralement réalisées à partir de compositions comprenant un polymère, classiquement un polyamide, différents additifs comme un plastifiant, du modifiant choc et un stabilisant.

Ce stabilisant peut être un stabilisant organique ou plus généralement une combinaison de stabilisants organiques, tel un antioxydant primaire de type phénol (par exemple du type de celle de l'irganox 245 ou 1098 ou 1010 de la société Ciba), un antioxydant secondaire de type phosphite et voire éventuellement d'autres stabilisants comme un HALS, ce qui signifie Hindered Amine Light Stabiliser ou stabilisant lumière de type amine encombrée (par exemple le Tinuvin 770 de la société Ciba), un anti-UV (par exemple le Tinuvin 312 de la société Ciba), un stabilisant phénolique ou à base de phosphore. On peut également utiliser des antioxydants de type amine tel le Naugard 445 de la société Crompton ou encore des stabilisants polyfonctionnels tel le Nylostab S-EED de la société Clariant.

Ce stabilisant peut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Ces stabilisants minéraux sont plus particulièrement employés, lorsque les structures doivent avoir une résistance thermique améliorée à long terme dans l'air chaud, notamment pour des températures supérieures ou égales à 100-120°C, car ils tendent à empêcher les coupures de chaînes polymériques.

Au regard de l'augmentation des températures sous capot moteur, il devient nécessaire d'utiliser de tels stabilisants minéraux pour permettre une résistance à la dégradation prolongée (durée de vie du véhicule) de la pièce à l'agression de l'air chaud.

Malheureusement, les pièces constituées de ces structures stabilisées par des stabilisants minéraux présentent des inconvénients en terme de résistance à la dégradation, lorsque lesdites pièces se trouvent en contact avec du bio-carburant, et tout particulièrement du bio-diesel, tel que du bio-diesel à base d'esters issus de l'huile de soja (SME ou Soy Methyl Ester), et ceci de manière aggravée lorsque la proportion en espèce "bio", c'est-à-dire d'origine non fossile (ester), est élevée au sein de ce bio-carburant, et lorsque la température dudit bio-carburant est élevée, généralement égale voire supérieure à 120°C. Ceci est dû au fait que ces bio-carburants subissent une dégradation plus ou moins importante, conduisant à une production de peroxydes en une teneur non négligeable notée PON > 50 voire 200 et plus, le PON étant l'indice de peroxyde PON signifiant PerOxyde Number. Ces peroxydes se décomposent facilement en radicaux libres sous l'effet du cuivre et, dans une moindre mesure, sous l'effet d'autres métaux. Ces radicaux peuvent ainsi attaquer le polymère et conduire à sa dégradation chimique et à la perte de ses propriétés de résistance mécanique, donc à la ruine de la structure.

Ainsi, il serait intéressant de trouver une structure possédant une double qualité, à savoir une structure dont la tenue au vieillissement thermique (par exemple au contact de l'air chaud) serait très bonne, tout en possédant une très bonne tenue au vieillissement au contact de fluides agressifs (ou susceptible de le devenir dans le temps), tels les bio-carburants.

La présente invention vise donc à résoudre ce problème et à remédier aux inconvénients relevés ci-dessus.

L'invention porte sur une structure multicouche comprenant au moins deux couches :
- une couche, dite interne, destinée à être en contact avec un fluide, constituée d'une composition comprenant au moins un polymère et ne comprenant pas de cuivre, et
- une couche, dite externe, destinée à être en contact avec l'air, constituée d'une composition comprenant au moins un polymère et au moins un stabilisant à base de cuivre.

La combinaison de ces deux couches au sein d'une structure permet d'améliorer chacun des effets recherchés, à savoir la tenue au vieillissement thermique et la tenue face au bio-carburant peroxydé.

Avantageusement, les couches, dites interne et externe, présentent une bonne adhérence permettant d'éviter le phénomène de décollement des couches entre elles, notamment au cours du temps. Pour éviter ce phénomène, soit on choisit judicieusement les compositions des couches, dites interne et externe, soit on intercale une couche de liant approprié.

### Composants de la structure

Par stabilisant à base de cuivre, on entend un composé comprenant au moins un atome de cuivre, notamment sous forme ionique, ionisable, par exemple sous forme de complexe.

De préférence, la composition de la couche, dite interne, ne comprend en outre aucun autre métal de transition.

De manière encore plus préférée, la composition de la couche, dite interne, qui ne comprend pas de stabilisant à base de cuivre et, le cas échéant, aucun autre métal de transition, peut par contre comprendre au moins un stabilisant organique.

Par stabilisant organique, on entend un composé ne comprenant pas d'atome métallique, et étant constitué essentiellement d'atomes de carbone, hydrogène, et éventuellement d'atomes d'oxygène, azote, soufre et phosphore. Ce stabilisant organique permet, entre autre, d'améliorer la stabilité thermique du polymère.

Les polymères mis en oeuvre dans les compositions des couches, dites interne et externe, peuvent être identiques ou différents. De préférence, les polymères mis en oeuvre sont des polymères thermoplastiques.

L'invention concerne plus particulièrement des structures multicouches à base de polyamide(s), c'est-à-dire des structures dans lesquelles le polymère mis en oeuvre dans la composition de l'une au moins des couches, dites interne et externe, est un polyamide ou un mélange de polyamides.

De manière avantageuse, les compositions constituant les couches de la structure comportent majoritairement un polyamide ou un mélange de polyamides.

Préférentiellement, l'invention se rapporte à une structure multicouche comprenant :
- une couche, dite interne, constituée d'une composition comprenant majoritairement au moins un polyamide et ne comprenant pas de cuivre, avec préférentiellement au moins un stabilisant organique, et
- une couche, dite externe, constituée d'une composition comprenant majoritairement au moins un polyamide et au moins un stabilisant à base de cuivre.

Il est possible de considérer des structures multicouches comprenant une couche externe à base d'un polymère différent du polyamide et une couche interne (avec une stabilisation sans cuivre) à base d'un polymère différent du polyamide.

A titre d'illustration de ce qui précède, on peut notamment envisager une structure bicouche, par exemple un tube, constituée :
- d'une couche comprenant du PA11 et un stabilisant à base de cuivre et
- d'une couche comprenant du polypropylène et, le cas échéant, un stabilisant organique.

On pourrait également envisager une structure bicouche formée de deux couches en PVDF, la composition de l'une des deux couches comprenant un stabilisant à base de cuivre, la composition de l'autre couche ne comprenant pas de cuivre.

Les couches, dites interne et externe, sont de préférence majoritairement constituées d'un polyamide ou d'un mélange de polyamides.

Le polymère majoritaire peut ainsi représenter au moins 50% en poids par rapport au poids total de la composition constituant l'une au moins des couches, dites interne et externe.

Définissons ce que nous entendons par polyamide.

Selon la présente demande, le terme "polyamide", également noté PA, vise
- les homopolymères,
- les copolymères, ou copolyamides, à base de différents motifs amide, tel par exemple le copolyamide 6/12 avec des motifs amide dérivés du lactame-6 et du lactame-12,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide. Les exemples les plus connus sont les polyéther-bloc-amide, notés PEBA, et leurs variantes copolyamide-ester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA-6.12.

On distingue également les homopolyamides, copolyamides et et alliages par leur nombre moyen d'atomes de carbone par atome d'azote.

Un polyamide fortement carboné est un polyamide à fort taux d'atomes de carbone (C) par rapport à l'atome d'azote (N). Il y a autant d'atomes d'azote qu'il y a de groupes amide (-CO-NH-) dans un polyamide. Les polyamides fortement carbonés sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

Un polyamide fortement carboné est très souple et très endurant (en particulier en choc à froid, en vieillissement dans l'air chaud, en résistance au chlorure de zinc). Les compositions majoritaires en ce type de polyamides seront avantageusement utilisées comme couche externe, et aussi parfois comme couche interne des structures multicouches.

Le polyamide-11 et le polyamide-12 sont deux polyamides très proches en propriété à l'état solide et fondu. Ils sont en particulier très souples et donc particulièrement adaptés pour tenir le rôle de polyamide souple et endurant. Dans de nombreux cas, on peut utiliser l'un ou l'autre. On notera toutefois que le polyamide-11 possède des propriétés supérieures au polyamide-12, en particulier en tenue au choc à froid et en tenue mécanique à chaud (éclatement à chaud par exemple). On le préférera donc pour les situations particulièrement extrêmes. Le polyamide-11 a de plus l'avantage d'être un bio-polymère, car issu d'une matière première végétal, et donc renouvelable.

Un polyamide faiblement carboné est un polyamide à faible taux d'atomes de carbone (C) par rapport à l'atome d'azote (N). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.1/6.6, le copolyamide 6.T/6.I/6.6, le polyamide 9.T. I représente le diacide isophtalique..

Au contraire, une composition à base de polyamide faiblement carboné sera plus fragile, mais possédera des propriétés barrières aux carburants, c'est-à-dire très peu perméable aux carburants. On le retrouvera donc avantageusement en couche médiane, voire en couche interne des structures multicouches.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Dans le cas d'un homopolyamide de type PA-X.Y, avec X désignant un motif obtenu à partir d'une diamine et Y désignant un motif obtenu à partir d'un diacie, le nombre d'atomes de carbone par atome d'azote est la moyenne des nombres d'atomes de carbone présents dans le motif issu de la diamine X et dans le motif issu du diacide Y. Ainsi le PA6.12 est un PA à 9 atomes de carbone par atome d'azote, autrement dit un PA en C9. Le PA6.13 est en C9.5. Le PA-12.T est en C10, l'acide téréphtalique, étant en C8.

Dans le cas des copolyamides, le nombre moyen d'atomes de carbone par atome d'azote se calcule selon le même principe. Le calcul est réalisé au prorata molaire des différents motifs amides. Ainsi le coPA-6.T/6.6 60/40 en mol% est en C6,6 : 60%x(6+8)/2+40%x(6+6)/2 = 6,6. Dans le cas d'un copolyamide ayant des motifs de type non amide, le calcul s'effectue uniquement sur la part de motifs amides. Ainsi, par exemple, le PEBA-12, qui est un copolymère bloc de motifs amide 12 et de motifs éther, le nombre moyen d'atome de carbone par atome d'azote sera 12, comme pour le PA12 ; pour le PEBA-6.12, il sera de 9, comme pour le PA6.12.

Dans le cas des mélanges ou alliages, le calcul du nombre moyen d'atomes de carbone par atome d'azote s'effectue uniquement sur la fraction constituée de polyamides. Par exemple, une composition avec 67 parts massiques de PA12 (12 atomes de carbone par atome d'azote), 33 parts massiques de PA6 (6 atomes de carbone par atome d'azote) sera une composition polyamide à 10 atomes de carbone par atome d'azote, autrement dit en C10. Le calcul est le suivant : 12x67/(67+33) + 6x33/(67+33). Dans le cas d'une composition semblable mais comprenant en plus 40 parts de modifiant choc EPR, qui n'est pas un polyamide, le nombre moyen d'atome de carbone par atome d'azote sera également de 10.

De préférence, le polymère majoritaire, qui correspond généralement au polymère formant la phase continue, également appelée matrice, de la composition de l'une au moins des couches, dites interne et externe, est un polyamide ou un mélange de polyamides fortement carbonés, c'est-à-dire dont le nombre moyen d'atomes de carbone par atome d'azote est d'au moins 7,5, de préférence d'au moins 9, et de façon encore plus préférée d'au moins de 10.

Par "mélange de polyamides", on entend le mélange d'au moins deux des polymères répondant à la définition de "polyamides" ci-dessus.

Plus particulièrement, les polyamides sont choisis parmi le PA11, le PA12, le PA10.10, le PA10.12, le PA6.18, le PA10.T, le PA12/10.T et le PA11/10.T et leurs mélanges.

Le polyamide ou le mélange de polyamides est choisi de façon à bien résister aux bio-carburants chauds, en particulier les bio-essences à base d'alcool.

Le polyamide ou le mélange de polyamides est choisi de préférence suffisamment semi-cristallin, c'est-à-dire avec une enthalpie de fusion supérieure ou égale à 25J/g (mesurée par DSC) rapportée à la fraction massique de polyamides(s) de la composition.

Les enthalpies de fusion des polyamides présents dans la composition selon l'invention sont mesurées conformément à la norme ISO 11357. Ainsi, le polyamide est soumis à une première chauffe de 20°C/min jusqu'à une température de 280°C, puis à un refroidissement 20°C/min jusqu'à une température de 20°C, puis à une seconde chauffe de 20°C/min jusqu'à une température de 280°C, l'enthalpie de fusion étant mesurée lors de cette seconde chauffe.

Préférentiellement, le polyamide ou le mélange de polyamides doit pouvoir être utilisé à des températures de service élevées. De préférence, les polyamides présentent une température de fusion supérieure ou égale à 170°C.

Le stabilisant à base de cuivre présent au sein de la couche externe peut être choisi parmi le chlorure cuivreux, le chlorure cuivrique, le bromure cuivreux, le bromure cuivrique, l'iodure cuivreux, l'iodure cuivrique, l'acétate cuivreux et l'acétate cuivrique. On peut citer les halogénures, les acétates d'autres métaux tels l'argent en association avec le stabilisant à base de cuivre. Ces composés à base de cuivre sont typiquement associés à des halogénures de métaux alcalins. Un exemple bien connu est le mélange de CuI et KI, où le ratio CuI:KI est typiquement compris entre 1:5 à 1:15. Un exemple d'un tel stabilisant est le Polyadd P201 de la société Ciba.

On trouvera de plus amples détails sur les stabilisants à base de cuivre dans le brevet US 2,705,227. Plus récemment, sont apparus des stabilisants à base de cuivre tel les cuivres complexés comme les Bruggolen H3336, H3337, H3373 de la société Brueggemann.

Avantageusement, le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

De préférence, le stabilisant à base de cuivre est présent dans la composition constituant la couche externe de la structure en une teneur comprise entre 0,05 et 1,5% en poids par rapport au poids total de ladite composition.

Il est précisé que l'expression "compris entre" utilisée dans les paragraphes précédents, mais également dans la suite de la présente description, doit s'entendre comme incluant chacune des bornes mentionnées.

La couche interne ne doit pas contenir de stabilisant à base de cuivre.

Elle peut ne pas contenir de stabilisant organique, notamment dans le cas où le polymère constituant la couche interne est suffisamment résistant ou intrinsèquement très stable. Si le polymère de la couche interne présente des problèmes de stabilité, tels que ceux exposés ci-dessus, un stabilisant organique est alors nécessaire.

Le stabilisant organique présent au sein de la couche interne peut être choisi, sans que cette liste soit restrictive, parmi :
- les anti-oxydants phénoliques, par exemple l'Irganox 245, l'Irganox 1010, l'Irganox 1098 de la société Ciba, l'Irganox MD1024 de la société Ciba, le Lowinox 44B25 de la société Great Lakes,
- les stabilisants à base de phosphore, comme les phosphites, par exemple l'Irgafos 168 de la société Ciba,
- un absorbeur UV, tel le Tinuvin 312 de la société Ciba,
- un HALS, comme précédemment mentionnée,
- un stabilisant de type amine, tel le Naugard 445 de la société Crompton, ou encore de type amine encombrée tel le Tinuvin 770 de la société Ciba,
- un stabilisant polyfonctionnel tel le Nylostab S-EED de la société Clariant.

On peut bien évidemment envisager un mélange de deux, ou plus, de ces stabilisants organiques.

De préférence, le stabilisant organique est présent au sein du polymère dans la composition constituant la couche interne de la structure en une teneur comprise entre 0,3 et 3% en poids par rapport au poids total de ladite composition.

La composition de l'une au moins des couches, dites interne et externe, peut comprendre jusqu'à 30% en poids, par rapport au poids total de ladite composition d'un modifiant choc.

Le modifiant choc est, avantageusement constitué par un polymère présentant un module de flexion inférieur à 100 MPa mesuré selon la norme ISO 178 et de Tg inférieure à 0°C.

De préférence, le modifiant choc est constitué d'une ou plusieurs polyoléfines, une partie ou la totalité de celles-ci portant une fonction choisie parmi les fonctions acide carboxylique, anhydride carboxylique et époxyde. Tout particulièrement, la polyoléfine peut être choisie parmi un copolymère d'éthylène et de propylène à caractère élastomère (EPR), un copolymère éthylène-propylène-diène à caractère élastomère (EPDM) et un copolymère éthylène/(meth) acrylate d'alkyle.

La composition de l'une au moins des couches, dites interne et externe et, de préférence la composition de la couche interne, comprend jusqu'à 50% en poids, par rapport au poids total de ladite composition, d'une polyoléfine semi-cristalline ou d'un mélange de polyoléfines, présentant un module de flexion, mesuré selon la norme ISO 178, supérieur à 300 MPa, avantageusement supérieur à 800 MPa.

Une partie ou la totalité de la polyoléfine semi-cristalline rigide, ou du mélange de polyoléfines rigides, peut porter une fonction choisie parmi les fonctions acide carboxylique, anhydride carboxylique et époxyde. De préférence, la polyoléfine semi-cristalline, ou le mélange de polyoléfines, est choisie parmi les polyéthylènes de haute densité, les polypropylènes homopolymères ou faiblement copolymérisés.

Les compositions des couches, dites interne et externe, peuvent également comprendre des additifs usuels tels les plastifiants, les colorants, les pigments, les azurants, les nucléants, les charges antistatiques telles le noir de carbone ou les nanotubes de carbone.

Des structures multicouches comprenant une couche interne de nature antistatique peuvent présenter un avantage supplémentaire, en particulier vis-à-vis de la législation de certain pays comme les Etats-Unis.

### Catégories de structures

Dans une version avantageuse de l'invention, la structure peut comprendre au moins une couche présentant des propriétés barrière, c'est-à-dire très peu perméable aux fluides automobiles, notamment aux carburants.

Selon un premier mode de réalisation, la couche barrière peut ainsi être constituée d'une composition comprenant majoritairement au moins un polymère choisi parmi un polymère fluoré et un copolymère d'éthylène et de vinylalcool (EVOH).

Avantageusement, le polymère fluoré est choisi parmi le polyfluorure de vinylidène (PVDF), le copolymère d'éthylène et de tetrafluoroéthylène (ETFE), le copolymère d'éthylène, de tetrafluoroéthylène et d'hexafluoropropylène (EFEP-C). Le polymère fluoré peut être fonctionnalisé. On peut notamment utiliser un PVDF fonctionnalisé anhydride.

De préférence, la couche barrière est constituée d'une composition comprenant majoritairement, un copolymère EVOH.

Selon un deuxième mode de réalisation, la couche barrière aux fluides automobiles peut être constituée d'une composition comprenant majoritairement au moins un polyamide choisi parmi un polyamide cristallin faiblement carboné, possédant de préférence des motifs aromatiques, et un alliage d'au moins un polyamide faiblement carboné, possédant de préférence des motifs aromatiques et une polyoléfine.

Dans une variante plus particulièrement préférée, la couche barrière est constituée d'une composition comprenant majoritairement, au moins un polyamide faiblement carboné, dont le nombre moyen d'atomes de carbone par atome d'azote est inférieur à 9, de préférence inférieur à 8,5, de préférence inférieur à 7,5, et éventuellement un polyamide comprenant des motifs aromatiques.

Les polyamides faiblement carbonés, éventuellement très cristallins, éventuellement à base de motifs aromatiques sont des matériaux qui peuvent présenter les propriétés barrières les plus intéressantes. En effet, les polyamides sont d'autant plus barrières qu'ils sont faiblement carbonés et qu'ils sont riches en motifs aromatiques.

Si le fluide à transporter ou à stocker est un carburant constitué de grosses molécules comme les diesels et bio-diesels (mélange de diesel classique et d'esters gras), les matériaux à base de polyamides fortement carbonés sont pleinement suffisants en terme de propriété barrière, c'est-à-dire qu'ils sont très peu perméables aux fluides..

Par conséquent, pour ce cas de figure, la structure bi-couche selon l'invention peut n'être constituée que des deux couches, dites interne et externe.

La structure selon l'invention peut donc être constituée :
- d'une couche, dite interne constituée d'une composition comportant un polyamide fortement carboné et un stabilisant organique et,
- une couche dite externe comprenant une composition comportant un polyamide fortement carboné et un stabilisant à base de cuivre.

Le polyamide fortement carboné peut être par exemple un PA12.

La présence d'un matériau barrière est nécessaire, si les carburants ou fluides (qui sont destinés à être transportés ou stockés dans la structure multicouche) comprennent de petites molécules telles les essences et bio-essences (mélanges d'essence classique et d'alcool).

Dans une variante de l'invention, la couche barrière aux fluides automobiles peut être formée par la couche, dite interne.

Selon cette variante, la composition de la couche interne est formée par un polymère fluoré, tel que défini ci-dessus comme le tetrafluoroéthylène et d'hexafluoropropylène EFEP-C (Structure 4, Annexe 1) ou le polyfluorure de vinylidène PVDF, il peut être inutile d'ajouter un stabilisant organique à cette composition pour renforcer sa résistance au vieillissement, car certains de ces polymères sont suffisamment résistants en eux-mêmes.

Dans une autre version avantageuse de l'invention, la structure peut en outre comprendre au moins une couche de liant, disposée entre les couches dites interne et externe.

En particulier, lorsqu'il faut faire adhérer une couche à base de polyamide fortement carboné et une couche à base de polyamide faiblement carboné ou à base d'EVOH, alors, avantageusement, la couche de liant est constituée d'une composition choisie parmi un mélange de copolyamides 6/12, l'un riche en motifs 6, l'autre riche en motifs 12, une polyoléfine fonctionnalisée et un mélange de plusieurs polyamides avec une polyoléfine fonctionnalisée.

Le liant peut ainsi comprendre un ou plusieurs polyamides, copolyamides, polypropylène greffé, seuls, en mélange ou en mélange avec des additifs.

On pourra notamment se reporter aux exemples de compositions de liants figurants dans les exemples.

Selon ce dernier mode de réalisation, les structures peuvent être constituées de 3 couches avec en tant que couche externe : une couche endurante de polyamide fortement carboné comprenant le stabilisant à base cuivre, une couche de liant intermédiaire et en tant que couche : une couche de polyamide barrière, dont le nombre moyen d'atomes de carbone par atome d'azote est inférieur à 9, pouvant comprendre un stabilisant organique. Selon un mode de réalisation préféré, le polyamide barrière possède des motifs aromatiques.

Si le polyamide barrière est associé à une polyoléfine très cristalline, l'effet barrière est encore renforcé, en particulier dans l'hypothèse où le bio-carburant, notamment la bio-essence, contient un fort taux d'éthanol. En effet, une telle composition à base d'un polymère polaire tel qu'un homopolyamide faiblement carboné aliphatique, et un polymère fortement cristallin mais apolaire, tel qu'un polyéthylène haute densité (PEHD) ou un homopolypropylène, est particulièrement propre à offrir une barrière vis-à-vis d'un mélange d'hydrocarbures apolaires et d'alcool polaire tel que la bio-essence. Comme polyamide barrière, on peut bien sûr aussi considérer un polyamide possédant des motifs aromatiques, et de préférence faiblement carboné.

Lorsqu'une couche d'EVOH est utilisée en tant que couche barrière, une ou plusieurs couches de liant peuvent être également nécessaires.

Si l'on intercale une couche d'EVOH entre la couche de polyamide barrière en interne et la couche de liant intermédiaire, on obtient des structures très peu perméable aux fluides. L'effet barrière aux bio-essences (essences comportant de l'alcool, notamment de l'éthanol) sera d'autant plus marqué que l'EVOH sera riche en motifs hydroxyde de vinyle et pauvre en motifs éthylène. Par exemple, un EVOH à 24% d'éthylène sera plus performant qu'un EVOH à 44% d'éthylène. Par ailleurs, un EVOH riche en motifs hydroxyde de vinyle et pauvre en motifs éthylène sera d'autant plus résistant dans les bio-essences que la température de ces dernières sera particulièrement élevée.

Ainsi, on peut distinguer des structures à 4 couches et des structures à 5 couches symétriques avec un polyamide fortement carboné en tant que couche externe. Ces dernières structures sont plus endurantes en choc, en tenue au ZnCl₂ et en tenue aux peroxydes.

Selon un autre mode de réalisation, la structure peut comprendre, entre les couches dites interne et externe, au moins l'une des couches successives suivantes :
- de manière optionnelle, une première couche de liant, disposée sur la couche interne,
- au moins une couche intermédiaire, et
- de manière optionnelle, une seconde couche de liant disposée entre la couche intermédiaire et la couche externe.

Selon un autre mode de réalisation, la chaque couche intermédiaire peut comprendre :
- soit une composition adhésive ou liant, -
- soit un matériau barrière, qui peut être choisi parmi :
   - soit des compositions à base de copolymères d'éthylène et de vinylalcool (EVOH), de polyamides faiblement carbonés, de polyamides amorphes de haute Tg (80-200°C), tel que les coPA6.I, I étant l'acide téréphtalique, de polyphtalamides semi-cristallins, seuls, en mélange, ou leurs compositions à base d'oléfine(s) fonctionnalisée(s) ou non, de plastifiant, modifiant choc, stabilisant et autres additifs ou de polyamide A tel que défini ci-dessus,
   - soit des compositions à base de polymères fonctionnalisés par de l'anhydride ou par une autre fonction réactive avec les bouts de chaîne amine ou acide comme des polymères fluorés, tels que le polyfluorure de vinylidène (PVDF) fonctionnalisé, le copolymère d'éthylène et de tétrafluoroéthylène (ETFE) fonctionnalisé, le copolymère d'éthylène, de tétrafluoroéthylène et d'hexafluoropropylène (EFEP) fonctionnalisé, le polysulfure de phénylène (PPS) fonctionnalisé., le naphtalate de polybutylène (PBN) fonctionnalisé.

Par "fonctionnalisé", on entend la présence de fonctions réactives pouvant réagir avec les bouts de chaînes des polymères constituant l'autre couche.

Selon un autre mode de réalisation, la phase continue de chacune des couches de la structure peut être constituée de polyamide.

Afin d'assurer l'intégrité physique de la structure multicouche et d'éviter des problèmes comme, par exemple, des fuites au raccord, les compositions des couches, et en particulier celles des liants, seront de préférence telles que la force de pelage (de la moins forte des interfaces) soit d'au moins 20N/cm (pelage réalisé à 50mm/min sous un angle de 90°) après immersion de la structure dans du bio-diesel B30 pendant 200h à 80°C.

L'épaisseur des couches dites interne et externe de la structure selon l'invention peut être comprise entre 50 et 950µm, bornes comprises.

Les structures décrites ci-dessus peuvent se présenter sous la forme d'un tube, d'un récipient, d'un film ou d'une plaque, de préférence d'un tube.

L'invention concerne également l'utilisation de la structure telle que définie ci-dessus pour le transport ou le stockage de fluides, en particulier de fluides présents dans les véhicules et autres moyens de locomotion.

Les fluides visés peuvent être un fluide polaire et/ou apolaire et peut notamment être choisi parmi une huile, un liquide de frein, des solutions d'urée, des liquides de refroidissement à base de glycol, des carburants, et particulièrement des bio-carburants.

Parmi les bio-carburants, on peut citer les mélanges d'essences et d'alcool et tout particulièrement les bio-diesels qui sont des mélanges de diesel et d'ester d'origine végétale. On peut citer les huiles végétales de colza (appelé RME) et de soja (appelé SME)

Les exemples suivants servent à illustrer l'invention sans toutefois présenter un caractère limitatif.

### EXEMPLES

### 1/Exemples de compositions

Des exemples de compositions de couches compatibles avec des structures multicouches conformes à l'invention et mis en oeuvre dans les exemples de tubes multicouches sont donnés ci-après.

Les compositions sont typiquement préparées par compoundage en extrudeuse, technique connue par l'homme de l'art. Des variantes sont possibles comme la technique du « dry-blend » en langue anglaise. Lescompositions thermoplastiques des exemples sont fabriquées par la technique du compoundage en extrudeuse bi-vis corotative engrenante de type Werner & Plfleiderer Super-Compounder de 40mm à un débit de 70 kg/h, à une vitesse de 300 rpm. La température de la machine dépend du type de polymères considéré. On s'assure que les polymères de la composition sont tous bien fondus par la machine, c'est-à-dire que la machine se trouve à une température suffisamment supérieure à la température de fusion du polymère possédant la tempérautre de fusion la plus élevée de la composition.

Pour les compositions contenant du PA11, PA12, PA6, PA610, PA612, PA614, MXD6, EVOH, PVDF, amPASA le compoundage est réalisé en mettant l'extrudeuse à 270°C sur ses zones de chauffe.

Pour les compositions à base de PA1210T, d'ETFE, il faut travailler à 280°C.

Pour les compositions à base de PPA, PPAa, il faut travailler à 310°C.

Pour les compositions à base de PPAb, il faut travailler à 320°C.

PA1210T-Cu désigne un coPA121/0.T, c'est-à-dire un copolyamide 12 avec 50% en mol de 10.T, 10.T correspondant à la diamine linéaire en C10 et T à l'acide téréphtalique, ce copolymère étant de Mn 20000, ce copolymère étant stabilisé par 0.5% de stabilisant à base d'iodure de cuivre et de potassium de type Polyadd P201 (société Ciba). Ce stabilisant est constitué de 10% d'iodure de cuivre, de 80% d'iodure de potassium, et de 10% de stéarate de zinc.

PA11 Cu désigne une composition à base de polyamide 11 de Mn (masse moléculaire en nombre) 29000, contenant 5% de plastifiant BBSA (benzyl butyl sulfonamide), 6% de modifiant choc type éthylène/acrylate d'éthyle/anhydride en rapport massique 68,5/30/1,5 (MFI 6 à 190°C sous 2.16 kg), et de 0.5% de stabilisant à base d'iodure de cuivre et de potassium de type Polyadd P201 (société Ciba).

PA11Choc. désigne une composition à base de polyamide 11 de Mn (masse moléculaire en nombre) 29000, contenant 20% de modifiant choc type éthylène/acrylate d'éthyle/anhydride en rapport massique 68,5/30/1,5 (MFI 6 à 190°C sous 2.16 kg), et 0.5% de stabilisant à base d'iodure de cuivre et de potassium de type Polyadd P201 (société Ciba).

PA 11 CCu. désigne une composition à base de polyamide 11 de Mn (masse moléculaire en nombre) 29000, contenant 5% de plastifiant BBSA (benzyl butyl sulfonamide), 6% de modifiant choc type éthylène/acrylate de butyle/anhydride en rapport massique 79/18/3 (MFI 5 à 190°C sous 2.16 kg), et de 0.5% de stabilisant à base d'iodure de cuivre et de potassium de type Polyadd P201 (société Ciba).

PA11CTL. Désigne une composition à base de polyamide 11 de Mn (masse moléculaire en nombre) 29000, contenant 5% de plastifiant BBSA (benzyl butyl sulfonamide), 6% de modifiant choc type éthylène/acrylate de butyle/anhydride en rapport massique 79/18/3 (MFI 5 à 190°C sous 2.16 kg), et 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

PA11ChocTL. désigne une composition à base de polyamide 11 de Mn (masse moléculaire en nombre) 29000, contenant 20% de modifiant choc type éthylène/acrylate d'éthyle/anhydride en rapport massique 68,5/30/1,5 (MFI 6 à 190°C sous 2.16 kg), et 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

PA12-Cu. désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 0.5% de stabilisant à base d'iodure de cuivre et de potassium de type Polyadd P201 (société Ciba).

PA11CuB. désigne une composition à base de polyamide 11 de Mn (masse moléculaire en nombre) 29000, contenant 7% de plastifiant BBSA (benzyl butyl sulfonamide) et de 0.5% de stabilisant Bruggolen H3373 de type minéral de la société Bruggemann.

PA11CuBH. désigne une Composition à base de polyamide 11 de Mn (masse moléculaire en nombre) 29000, contenant 7% de plastifiant BBSA (benzyl butyl sulfonamide) et de 0.5% de stabilisant Bruggolen H3337 de type minéral de la société Bruggemann.

PA11 BCu. Désigne une composition à base de polyamide 11 de Mn (masse moléculaire en nombre) 29000, contenant 5% de plastifiant BBSA (benzyl butyl sulfonamide), 6% d'EPR fonctionnalisé Exxelor VA1801 (société Exxon) et de 0.5% de stabilisant à base d'iodure de cuivre et de potassium de type Polyadd P201 (société Ciba).

PA1010Cu désigne une composition à base de polyamide 10.10 de Mn (masse moléculaire en nombre) 33000, contenant 10.5% de plastifiant BBSA (benzyl butyl sulfonamide), et 12% d'EPR fonctionnalisé anhydride Exxelor VA1801 (société Exxon), et de 0.5% de stabilisant à base d'iodure de cuivre et de potassium de type Polyadd P201 (société Ciba).

PPAd. Désigne une composition à base de polyphtalamide de type copolyamide 6.T/6 Ultramid TKR4351 de la société BASF, et de 25% d'EPR fonctionnalisé Exxelor VA1803 (société Exxon), et de 0.5% de stabilisant à base d'iodure de cuivre et de potassium de type Polyadd P201 (société Ciba).

PA11-TL désigne une composition à base de polyamide 11 de Mn (masse moléculaire en nombre) 29000, contenant 5% de plastifiant BBSA (benzyl butyl sulfonamide), 6% de modifiant choc type éthylène/acrylate d'éthyle/anhydride en rapport massique 68,5/30/1,5 (MFI 6 à 190°C sous 2.16 kg), et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba).

PA12-TL. désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la socité Ciba). La température de fusion de cette composition est de 175°C.

PA1210T-TL. désigne un coPA11/10.T, c'est-à-dire un copolyamide 11 avec 50% en mol de 10.T, 10.T correspondant à la diamine linéaire en C10 et T à l'acide téréphtalique, ce copolymère étant de Mn 20000, ce copolymère étant stabilisé par 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba).

PA11CTL. Désigne une composition à base de polyamide 11 de Mn (masse moléculaire en nombre) 29000, contenant 5% de plastifiant BBSA (benzyl butyl sulfonamide), 6% de modifiant choc type éthylène/acrylate de butyle/anhydride en rapport massique 79/18/3 (MFI 5 à 190°C sous 2.16 kg), et 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

PA11Choc-TL. désigne une composition à base de polyamide 11 de Mn (masse moléculaire en nombre) 29000, contenant 20% de modifiant choc type éthylène/acrylate d'éthyle/anhydride en rapport massique 68,5/30/1,5 (MFI 6 à 190°C sous 2.16 kg), et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba).

PA11 CondTL. désigne une composition à base de polyamide 11 de Mn (masse moléculaire en nombre) 29000, contenant 7% de plastifiant BBSA (benzyl butyl sulfonamide), 15% d'EPR fonctionnalisé Exxelor VA1801 (société Exxon), 18% de noir de carbone type Ensaco 250 de la société 3M, de 0.5% de stabilisant de type phénol Irganox 1010 de la société Ciba.

PA60yE. désigne un alliage composé d'une matrice en polyamide 6 de Mn 18000 (par exemple l'Ultramid B3 de la société BASF), et de 25% de hdPE (polyéthylène haute densité) de densité 0.96 et d'indice de fluidité 0.3 (à 190°C sous 2,16kg), de 10% d'EPR fonctionnalisé Exxelor VA1803 (société Exxon), de 8% de plastifiant BBSA (benzyl butyl sulfonamide), de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba), le tout faisant 100%.

PA6a. désigne une composition à base de polyamide 6 de Mn (masse moléculaire en nombre) 28000, contenant 10% de plastifiant BBSA (benzyl butyl sulfonamide), 12% d'EPR fonctionnalisé Exxelor VA1803 (société Exxon) et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la société Ciba).

PA6p1 désigne une composition à base de polyamide 6 de Mn (masse moléculaire en nombre) 18000, contenant 12% de plastifiant BBSA et de 1.2% de stabilisants organiques constitués de 0.8% de phénol (Lowinox 44B25 de la société Great Lakes), de 0.2% de phosphite (Irgafos 168 de la société Ciba), de 0.2% d'anti-UV (Tinuvin 312 de la socité Ciba). La température de fusion de cette composition est de 215°C.

PPAb. désigne une composition à base de polyphtalamide de type copolyamide 6.T/6 Ultramid TKR4351 de la société BASF, et de 25% d'EPR fonctionnalisé Exxelor VA1803 (société Exxon), et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

PPAa. désigne une composition à base de polyphtalamide de type coPA6.T/6.1/6.6 Amodel EXT1800 de la société Solvay.

PA60y désigne un alliage composé d'une matrice en polyamide 6 de Mn 18000 (par exemple l'Ultramid B3 de la société BASF), et de 30% de hdPE (polyéthylène haute densité) de densité 0.96 et d'indice de fluidité 0.3 (à 190°C sous 2,16kg), de 7% de hdPE fonctionnalisé par greffage de 1% d'anhydride maléïque d'indice de fluidité 1 (à 190°C sous 2,16kg), de 1.2% de stabilisants organiques (constitué de 0.8% de phénol Lowinox 44B25 de la société Great Lakes), de 0.2% de phosphite Irgafos 168 de la société Ciba, de 0.2% d'anti-UV Tinuvin 312 de la socité Ciba), le tout faisant 100%.

PPAOyTL. désigne un alliage composé d'une matrice en polyphtalamide de type copolyamide 6.T/6 Ultramid TKR4351 de la société BASF, et de 20% de hdPE (polyéthylène haute densité) de densité 0.96 et d'indice de fluidité 0.3 (à 190°C sous 2,16kg), de 15% d'EPR fonctionnalisé Exxelor VA1803 (société Exxon), et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

PVDFf désigne une composition à base de PVDF de MFI 5 (à 235°C, sous 5kg) fonctionnalisé par de l'anhydride maléique à hauteur de 0.5% massique.

ETFE désigne une composition à base d'ETFE (copolymère d'éthylène et de tetrafluoroéthylène) de connu sous la dénomination EP7000, de la société Daikin. La température de fusion de cette composition est de 255°C.

EVOH désigne un copolymère d'éthylène vinyl alcool par exemple Soarnol DC3203F de la société Nippon Gosei.

EVOH24 désigne un copolymère d'éthylène vinyl alcool par exemple EVAL M100B de la société Kuraray, d'un pourcentage molaire de 24% d'éthylène, une température de fusion de 195°C, et de MFR (Melt Flow Rate) de 2,2 g/10min à 210°C, selon ISO1133.

EVOH100 désigne un copolymère d'éthylène vinyl alcool contenant 24% de comonomère éthylène, fabriqué par la société Eval sous le nom d'Eval M100B. La température de fusion de cette composition est de 194°C.

EVOHim. désigne une composition à base d'EVOH et de modifiant choc d'EPR fonctionnalisé Exxelor VA1803 (société Exxon).

EFEP-C. désigne une composition antistatique à base d'EFEP (copolymère d'éthylène, de tetrafluoroéthylène et d'hexafluoro propylène) de connue sous la dénomination RP5000AS, de la société Daikin. La température de fusion de cette composition est de 195°C.

amPASAa désigne une composition à base de polyphtalamide de type copolyamide coPA6.I/6.T, à 70% en masse de motif 6.1, et de 25% d'EPR fonctionnalisé Exxelor VA1803 (société Exxon), et de 0.5% de stabilisant à base d'iodure de cuivre et de potassium de type Polyadd P201 (société Ciba). La température de transition vitreuse de cette composition amorphe est de 115°C.

### Liants :

| | |
|---|---|
| Liant 1 | PA6.10 + 18%PA6 + 18%PA12 + 10%coPE/EA/MAH Lotader + stab 11% |
| Liant 2 | PA6.12 + 18%PA6 + 18%PA12 + 10%coPE/EA/MAH Lotader + stab 11% |
| Liant 3 | PA6.14 18%PA6 + 18%PA12 + 10%coPE/EA/MAH Lotader + stab 11% |
| Liant 4 | PA6.10 + 18%PA6 + 18%PA12 + 10%coPE/EA/MAH Lotader + StabCu 0.7% |
| Liant 5 | PA6.12 + 18%PA6 + 18%PA12 + 10%EPR1 + StabCu 0.7% |
| Liant 6 | 28% PA6.10 + 18%PA6 + 18%PA12 + 10%hdPEf + 25%hdPE + stab 11% |
| Liant 7 | 12%PA6.10 + 24%PA6 + 10%CoPE/EA/MAH (Lotader) + 45% PA11 + 8% plastifiant + 1%Stab 1 |
| Liant 8 | 12% PA6.10 + 24%PA6 + 10%CoPE/EA/MAH (Lotader) + 45% PA12 + 8% plastifiant + 1%Stab 1 |
| Liant 9 | 12% PA6.10 + 41%PA6f + 10%CoPE/EA/MAH (Lotader) + 24% PA12 + 12% plastifiant + 1%Stab 1 |
| Liant 10 | 12% PA6.12 + 41%PA6f + 10%CoPE/EA/MAH (Lotader) + 24% PA12 + 12% plastifiant + 1%Stab 1 |
| Liant 11 | 12% PA6.12 + 41,3%PA6f + 10% EPR1 + 24% PA12 + 12% plastifiant + 0,7%Stab Cu |
| Liant 12 | 45%PA6.12 + 18%PPA + 10% EPR1 + 18% PA12 + 8% plastifiant + 1%Stab 1 |

Avec

PA6.10 signifiant Polyamide 6.10 de Mn (masse moléculaire en nombre) 30000 et ayant un excédent de bout de chaîne amine NH2 par rapport au bout de chaîne COOH, la concentration en bout de chaîne NH2 étant de 45 µeq/g. Son enthalpie de fusion est de 61 kJ/kg.

PA6.12 signifiant Polyamide 6.12 de Mn (masse moléculaire en nombre) 29000 et ayant un excédent de bout de chaîne amine NH2 par rapport au bout de chaîne COOH, la concentration en bout de chaîne NH2 étant de 47 µeq/g. Son enthalpie de fusion est de 67 kJ/kg.

PA6.14 signifiant Polyamide 6.14 de Mn (masse moléculaire en nombre) 30000 et ayant un excédent de bout de chaîne amine NH2 par rapport au bout de chaîne COOH, la concentration en bout de chaîne NH2 étant de 45 µeq/g. Son enthalpie de fusion est de 66 kJ/kg.

PA6. signifiant Polyamide 6 de Mn (masse moléculaire en nombre) 28000. Son enthalpie de fusion est de 68 kJ/kg.

PA12. signifiant Polyamide 12 de Mn (masse moléculaire en nombre) 35000. Son enthalpie de fusion est de 56 kJ/kg.

PA11. signifiant Polyamide 11 de Mn (masse moléculaire en nombre) 29000. Sa température de fusion est de 178°C et son enthalpie de fusion est de 56 kJ/kg.

PA6f signifie Polyamide 6 de Mn (masse moléculaire en nombre) 18000. La température de fusion de cette composition est de 220°C.

PPA signifie polyphtalamide de type copolyamide 6.T/6 en proportion massique de 71 et 29% de, de Mn 13500, en autre commercialisé sous le nom de Ultramid TKR4351 par la société BASF. Sa température de fusion est de 295°C et son enthalpie de fusion de 34 kJ/kg.

coPE/EA/MAH. signifiant Copolymère d'éthylène, d'acrylate d'éthyle et de l'anhydride maléique en rapport massique 68,5/30/1,5 (MFI 6 à 190°C sous 2.16 kg) utilisé en tant que modifiant choc.

EPR1. désignant un copolymère d'éthylène et de propylène à caractère élastomère fonctionnalisé par un groupe réactif à fonction anhydride (à 0.5-1% en masse), de MFI 9 (à 230°C, sous) 10kg, de type Exxellor VA1801 de la société Exxon utilisé en tant que modifiant choc.

hdPE désignant un polyéthylène haute densité, de densité 0,962, de température de fusion de 136°C, de MFI à 190°C sous 2,16 kg de 0,6.

hdPEf désignant un polyéthylène haute densité fonctionnalisé par un groupe réactif pouvant réagir avec un des bout de chaînes (ou autres fonctions réactives) du polyamide, de densité 0,960, de température de fusion de 134°C, de MFI à 190°C sous 2,16 kg de 2.

Stab1 . désignant un mélange de stabilisants organiques constitué de 0.8% de phénol Lowinox 44B25 de la société Great Lakes et de 0.2% de phosphite Irgafos.168 de la société Ciba.

StabCu. désignant un mélange de stabilisants minéraux à base d'iodure de cuivre et de potassium de type Polyadd P201 (société Ciba).

### Plastifiant désignant le benzyl butyl sulfonamide (BBSA)

Liant coPA. désigne une composition à base de 40% copolyamide 6/12 (de ratio 70/30 en masse) de Mn 16000, et de 40% copolyamide 6/12 (de ratio 70/30 en masse) de Mn 16000.

Liant Pupe. désigne une composition à base de PP (polypropylène) greffé avec de l'anhydride maléique, connu sous le nom d'Admer QF551A de la société Mitsui.

Liant PA610 + PA6. désigne une composition à base de PA610 (de Mn 30000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Liant PA610 + PA 12. désigne une composition à base de PA610 (de Mn 30000, et tel que défini par ailleurs) et de 36% de PA12 (de Mn 35000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Liant PA6 + PA12 + modifiant choc désigne une composition à base de 40% PA6 (de Mn 28000, et tel que défini par ailleurs), de 40% de PA12 (de Mn 35000, et tel que défini par ailleurs) et de 20% d'EPR fonctionnalisé Exxelor VA1801 (société Exxon) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

### 2/ Exemples de structures multicouches selon l'invention

Sauf mention contraire, les exemples se présentent sous la forme de tube présentant un diamètre externe de 8 mm avec un diamètre interne de 6 mm, soit une épaisseur de 1 mm. Ces dimensions sont caractéristiques des dimensions de tubes que l'on retrouve dans le domaine automobile.

Ces tubes ont été fabriqués par extrusion ou co-extrusion selon les procédés classiques d'obtention de tube.

Les exemples figurent dans le tableau 1.

Dans le tableau 1, figure la description des tubes multicouches, avec la nature chimique de chacune des couches, leur position, et leur épaisseur respective.

La couche dite externe est la couche en contact avec l'air, la couche dite interne est la couche en contact avec le fluide riche en espèces peroxydées et/ou en leurs produits radicalaires issus de leur décomposition, ces fluides étant en particulier les fluides automobiles, tout particulièrement les bio-carburants, encore plus particulièrement les bio-diesels.

Des contre-exemples, encore appelés exemples comparatifs, figurent à la suite des exemples dans le tableau 2.

Dans le tableau 3, figurent les résultats des expériences menées sur chacun des tubes définis dans le tableau 1. Les expériences menées sont définies ci-dessous. Les 2 propriétés attendues du tube multicouche permettant de résoudre le problème technique :
- la bonne tenue au vieillissement oxydatif associé à
- une bonne la tenue au peroxyde
sont testées.
Figurent ensuite d'autres propriétés avantageuses, telles que la mesure de la force de pelage pour évaluer l'adhésion entre les couches de la structure, rendant la structure multicouche encore plus à même de remplir sa fonction de véhiculer (ou de stocker) les fluides automobiles, en particulier les bio-carburants, tout particulièrement les bio-diesels.

Les résultats des expériences menées sur chacun des tubes des contre-exemples figurent dans le tableau 4.

Les structures des contre-exemples conduisent à de moins bons résultats que les structures selon l'invention. Par exemple, la structure du contre-exemple 3 du tableau 2: monocouche de PA11-TL, comparée à la structure 60 du tableau 1 : bicouche PA11Cu/ PA11-TL conduit à de moins bons résultats en terme de vieillissement oxydatif.

Dans le tableau 5, sont détaillés les paramètres d'extrusion des structures 5 (structure à 5 couches), 13 (structure à 4 couches), 25 (structure à 3 couches) et 58 (structure à 2 couches) définis dans le tableau 1.

Dans le tableau 3, les significations des termes employés sont les suivantes.

### Vieillissement oxydatif.

Il s'agit de la résistance du tube multicouche au vieillissement oxydatif dans l'air chaud. Le tube est mis à vieillir dans l'air à 150°C, puis il est choqué avec un choc selon la norme DIN 73378, ce choc étant réalisé à -40°C, on indique la demi-vie (en heures) qui correspond au temps au bout duquel 50% des tubes testés se cassent. Un commentaire qualitatif accompagne cette valeur.
Echelle de valeurs qualitatives :
TB+ = très très bien correspond à supérieur à 1750
TB = très bien correspond à compris entre 700 et 1750
B = bien correspond à compris entre 400 et 700 exclu
AB = assez bien correspond à compris entre 200 et 400 exclu
M = mauvais / insuffisant correspond à compris entre 100 et 200 exclu
TM = très mauvais correspond à inférieur à 100

### Tenue Peroxyde.

Il s'agit de la résistance de la structure multicouche au fluide peroxydé, ce dernier étant en contact avec la couche interne. On réalise le test suivant pour simuler un carburant ranci. Le tube multicouche est mis au contact en interne avec un biocarburant peroxydé d'indice PON de 200 environ (PON = Peroxyde Number ou nombre de peroxyde). Ce biocarburant est composé d'un mélange de fuel B et méthanol de composition massique 85% et 15%. Pour 1 litre de ce biocarburant, on rajoute 19.2 ml de solution à 80% de CHPO (cumène hydro peroxyde), 0.73g de stéarate de cuivre et 3 ml d'acide acétique. Cela donne un biocarburant de PON environ 200.

Le tube est exposé pendant à un certain temps à ce biocarburant à 80°C, la température de l'air extérieur étant également de 80°C. On prélève régulièrement du tube et on effectue un choc DIN à -40°C pour évaluer son état de dégradation. On note la demi-vie, celle-ci correspond au temps où l'on atteint 50% de casse. Plus la demi-vie est élevée, meilleure est la résistance du tube.

Si elle est supérieure à 1000h, c'est excellent (noté TB).

Entre 400 et 1000 h, c'est satisfaisant (noté B).

Entre 200 et 400h, c'est moyen et acceptable avec les biocarburants les moins instables (noté AB).

Entre 100 et 200, c'est mauvais et inacceptable (noté M).

A moins de 100h, c'est très mauvais (noté TM).

### Adhésion.

Elle se traduit par la mesure de la force de pelage, exprimée en N/cm, et mesurée sur le tube ayant subi un conditionnement de 15 jours à 50% d'humidité relative à 23°C. La valeur donnée concerne l'interface la plus faible, c'est-à-dire la moins adhérente du multicouche, là où il y a le plus grand risque de décollement. On effectue le pelage à l'interface en faisant subir à une des parties une traction sous un angle de 90° et à une vitesse de 50mm/min.

On reporte la valeur d'adhésion en N/cm. Une valeur d'adhésion supérieure à 30 N/cm est pleinement satisfaisante.

Avantageusement, les structures multicouches selon l'invention pourront présenter les propriétés suivantes, en plus des propriétés attendues décrites ci-dessus.

### Barrière bio-essence CE10.

L'effet barrière est décrit qualitativement et quantitativement par une mesure de perméation. Plus la perméabilité ou perméation est basse, meilleure est la performance barrière. Il s'agit d'une mesure de la perméation dynamique dans du carburant CE10 à 40°C en g.mm/m²/24h. Le carburant CE10 comprend 10% d'éthanol et 90% d'essence de référence "fluide C", qui est un mélange d'iso-octane et de toluène en quantité identique. Le carburant circule à l'intérieur du tube, à l'extérieur, il y a de l'air.

### Barrière diesel.

La perméabilité du diesel et du biodiesel est faible, l'effet barrière est aisé à obtenir. On signale qualitativement si l'effet barrière est suffisant.

### Tenue ZnCl₂.

Il s'agit de la résistance au chlorure de zinc. Les tubes, préalablement cintrés avec un rayon de courbure de 40mm, sont immergés dans une solution à 50% de ZnCl₂. On note le temps au bout duquel apparaissent des fissures ou la première casse.

Les critères d'appréciation sont les suivants.
TB = très bien, correspond à un temps >= 1500h
B = bien, correspond à un temps >= 800h
AB = assez bien, correspond à un temps >= 400h
M = mauvais, correspond à un temps <=100h
TM = très mauvais, correspond à un temps <= 1h

### Flexibilité.

La flexibilité du tube multicouche est décrite de façon qualitative et quantitative. Une bonne flexibilité est avantageuse pour le montage sur le véhicule.

Par bonne flexibilité, on entend un module de flexion de moins de 1000 MPa mesuré selon la norme ISO178.
TB = 300-500MPa
B+ = 500-700MPa
B = 700-900MPa
AB = 900-1200MPa
M = 1500-2000MPa
TM = > 2000 MPa

### Antistatique.

Cette colonne signale le caractère antistatique sur la face interne du tube multicouche. Le caractère antistatique est parfois requis dans les cahiers des charges de certains pays. Ce caractère correspond classiquement à une valeur de résistivité superficielle inférieure ou égale à 10⁶ ohm. Ce caractère peut donc être un avantage supplémentaire dans certains cas.

### Température de service.

Cette colonne indique la température maximale que peut supporter le tube multicouche sans fondre ou trop se déformer. Une température élevée est un avantage supplémentaire dans le cas de situation où l'environnement moteur est particulièrement chaud.

### 3/ Exemple de fabrication des structures multicouches : cas des tubes

Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :
u n ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
u n bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
u ne succession de bacs de refroidissement dans lesquels de l'eau est maintenue vers 20°C, permettant de refroidir le tube le long de parcours de la tête au banc de tirage ;
u n mesureur de diamètre ;
u n banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière.

Dans le cas des structures comportant 6 couches, une extrudeuse supplémentaire est connectée et un mandrin spiralé est ajouté à la tête existante, en vue de réaliser la couche interne, en contact avec le fluide.

Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

On se reportera à l'Annexe 3 qui présente de manière détaillée les paramètres d'extrusion mis en oeuvre pour les exemples 58 (2 couches), 25 (3 couches), 13 (4 couches) et 5 (5 couches) de l'Annexe 1, pour la fabrication de tubes de diamètre externe de 8 mm avec un diamètre interne de 6 mm, soit une épaisseur de 1 mm.

Généralement, la vitesse de ligne est typiquement de 20m/min. Elle varie généralement entre 5 et 100m/min.

La vitesse de vis des extrudeuses dépend de l'épaisseur de la couche et du diamètre de la vis comme cela est connu de l'homme de l'art.

De manière générale, les température des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Pour les compositions PA11, PA12, PA6, PA610, PA612, PA614, EVOH, PVDF, il faut assurer typiquement une température d'environ 240°C, voire jusqu'à 260°C si le produit est particulièrement visqueux. Pour ce faire, on règle au moins une partie des zones de chauffe de la machine, en particulier la partie aval de la vis et l'outillage aval (tête d'extrusion et raccord) à 240°C environ, de manière à obtenir la température de mélange visée.

Pour les compositions à base de PA1210T, d'ETFE, il faut travailler à 270°C environ. Pour les compositions à base de PPA, PPAa, il faut travailler à 310°C environ. Pour les compositions à base de PPAb, il faut travailler à 320°C environ.

Pour ces quatre exemples particuliers, comme pour tous les autres, les tubes, qui répondent aux caractéristiques décrites dans la présente demande de brevet, ont été prélevés, les paramètres d'extrusion étant stabilisés, les dimensions du tubes visées n'évoluant plus dans le temps. Le diamètre est contrôlé par un mesureur de diamètre laser installé en bout de ligne.

### 4/ Tests comparatifs

Les expériences suivantes ont été menées sur deux tubes selon l'art antérieur (monocouche) et sur un tube ayant une structure multicouche selon l'invention :
Exp 1 : le test du vieillissement oxydatif à l'air chaud, tel que défini ci-dessus, a été mis en oeuvre.
Exp 2 : le test de la tenue aux peroxydes, tel que défini ci-dessus, a été mis en oeuvre. Il est précisé que des résultats similaires en tenue aux peroxydes sont susceptibles d'être obtenus avec un tube qui aurait été immergé dans ce même biocarburant à 80°C.
Exp 3 : Le test mixte avec l'air chaud à l'extérieur du tube et le carburant peroxydé à l'intérieur du tube est une combinaison des 2 tests précédents. On fait circuler le carburant peroxydé à une température de 80°C. A l'extérieur, il y a de l'air chaud à 150°C (cas d'une ligne d'alimentation de carburant).

| | Exp 1 : Tenue à l'air chaud sur les 2 faces | Exp 2 : Tenue aux peroxydes sur face interne | Exp3 : Tenue mixte air chaud (extérieur)/ peroxydes (intérieur) |
|---|---|---|---|
| Tube monocouche en PA avec un stabilisant minéral au Cu | Très Bon (2000h) | Mauvais (< 200h ... ) | Mauvais (< 200h ... ) |
| Cx2 : PAI 1 Cu | | | |
| Tube monocouche en PA avec un stabilisant organique (TL) | Bon (400h) | Très Bon (> 1000h) | Moyen (320h) |
| Cx3 : PA11 -TL | | | |
| Tube multi-couche selon l'invention | Bon à très bon | Très Bon (> 1000h) | Bon à Très Bon |
| Ex 60 : PA11Cu (ext)/PA11TL (int) | (1550h) | | (850h) |

Des tests similaires ont été conduits avec des tubes comportant plus de deux couches, en particulier les tests des contre-exemples Cx 16 et Cx 17 et de l'exemple 5.

| | Exp 1 | Exp 2 | Exp 3 |
|---|---|---|---|
| Cx 16 | AB,350 | TB, >1000 | Moyen (275h) |
| Cx 17 | TB, 900 | M,< 200 | Mauvais (< 200h) |
| 5 | TB, 700 | TB, >1000 | Bon (600h) |

Les résultats des tableaux ci-dessus montrent bien la réelle synergie entre les compositions des couches dites interne et externe, les résultats obtenus lors des expériences 3 étant bien supérieurs, tant du point de vue du vieillissement oxydatif que de la tenue aux peroxydes et ce, qu'il y ait ou non présence d'au moins une couche intermédiaire, en l'espèce d'une couche d'EVOH, et de deux couches de liant.

**Tableau 1**

| ex n° | *couche externe* | *couches intermédiaires* | | | *couche interne* | | épaisseurs µm |
|---|---|---|---|---|---|---|---|
| 1 | PA11Cu | Liant 1 | PVDFf | Liant 1 | PA11-TL | | 400/50/100/50/400 |
| 2 | PA11Cu | Liant 1 | ETFE | Liant 1 | PA11-TL | | 400/50/100/50/400 |
| | *couche externe* | *couche intermédiaire* | | | *couche interne* | | |
| 3 | PA11Cu | Liant 1 | | | EFEP-C | | 850/50/100 |
| | *couche externe* | | | *couche interne* | | | |
| 4 | PA11Cu | | | EFEP-C | | | 900/100 |
| | *couche externe* | *couches intermédiaires* | | | *couche interne* | | |
| 5 | PA11Cu | Liant 1 | EVOH | Liant 1 | PA11-TL | | 400/50/100/50/400 |
| 6 | PA11Cu | Liant 1 | EVOH24 | Liant 1 | PA11-TL | | 400/50/100/50/400 |
| 7 | PA12-Cu | Liant 1 | EVOH | Liant 1 | PA11-TL | | 400/50/100/50/400 |
| 8 | PA11Choc | Liant 1 | EVOH | Liant 1 | PA11-TL | | 400/50/100/50/400 |
| 9 | PA11Choc | Liant 1 | EVOH | Liant 1 | PA11Choc-TL | | 400/50/100/50/400 |
| 10 | PA11Cu | Liant 1 | EVOHim | Liant 1 | PA11-TL | | 400/50/100/50/400 |
| 11 | PA11-Cu | Liant 1 | EVOHim | Liant 1 | PA11CondTL | | 400/50/100/50/400 |
| | *couche externe* | *couches intermédiaires* | | | | *couche interne* | |
| 12 | PA11-Cu | Liant 1 | EVOH | Liant 1 | PA11Choc | PA11 CondTL | 400/50/100/50/325/75 |
| 13 | PA11Cu | Liant 1 | EVOH | PA6OvE | Liant 1 | PA11-TL | 225/50/100/350/50/225 |
| | couche externe | couches *intermédiaires* | | | *couche interne* | | |
| 14 | PA11Cu | Liant 1 | | EVOH | PA6OvE | | 425/50/100/425 |
| 15 | PA11 Cu | Liant 1 | | EVOH24 | PA6OvE | | 425/50/100/425 |
| 16 | PA11Cu | Liant 1 | | EVOHim | PA6OvE | | 425/50/100/425 |
| 17 | PA11Cu | Liant 1 | | EVOH | PPAb | | 425/50/100/425 |
| | couche *externe* | *couche intermédiaire* | | | *couche interne* | | |
| 18 | Liant 4 | EVOH | | | Liant 1 | | 450/100/450 |
| 19 | Liant 5 | EVOH | | | Liant 2 | | 450/100/450 |
| | *couche externe* | *couches intermédiaires* | | | *couche interne* | | |
| 20 | PA11Cu | Liant 1 | | PPAa | PA6OvE | | 425/50/100/425 |
| 21 | PA11Cu | Liant 1 | | amPASAa | PA6OvE | | 425/50/100/425 |
| | *couche externe* | *couche intermédiaire* | | | *couche interne* | | |
| 22 | PA11Cu | Liant 1 | | | PA6a | | 475/50/475 |
| 23 | PA11Cu | Liant 1 | | | PPAa | | 475/50/475 |
| 24 | PA11Cu | Liant 1 | | | PPAb | | 475/50/475 |
| 25 | PA1210T-Cu | Liant 1 | | | PPAb | | 475/50/475 |
| | *couche externe* | *couche intermédiaire* | | | *couche interne* | | |
| 26 | Liant 5 | PPAa | | | Liant 1 | | 450/100/450 |
| | *couche externe* | *couche intermédiaire* | | | *couche interne* | | |
| 27 | PA11Cu | Liant 1 | | | PA6Ov | | 475/50/475 |
| 28 | PA11CuB | Liant 1 | | | PA6Ov | | 475/50/475 |
| 29 | PA11CuBH | Liant 1 | | | PA6Ov | | 475/50/475 |
| 30 | PA11 BCu | Liant 1 | | | PA6Ov | | 475/50/475 |
| 31 | PA11CCu | Liant 1 | | | PA6Ov | | 475/50/475 |
| 32 | PA1210T-Cu | Liant 1 | | | PA6Ov | | 475/50/475 |
| 33 | PA1010Cu | Liant 2 | | | PA6Ov | | 475/50/475 |
| 34 | PA1012Cu | Liant 2 | | | PA6Ov | | 475/50/475 |
| 35 | PA11Cu | Liant coPA | | | PA6Ov | | 475/50/475 |
| 36 | PA11Cu | Liant PPa | | | PA6Ov | | 475/50/475 |
| 37 | PA11Cu | Liant PA610 + PA6 | | | PA6Ov | | 475/50/475 |
| 38 | PA11Cu | Liant PA610 + PA12 | | | PA6Ov | | 475/50/475 |
| 39 | PA11Cu | Liant PA6 + PA12 + modifiant choc | | | PA6Oy | | 475/50/475 |
| 40 | PA11 Cu | Liant 1 | | | PA6OvE | | 475/50/475 |
| | *couche externe* | *couches intermédiaires* | | | *Couche interne* | | |
| 41 | PA11Cu | Liant 1 | PA6Oy | | PA6a | | 475/50/325/150 |
| | *couche externe* | *couche intermédiaire* | | | *couche interne* | | |
| 42 | PA11Choc | Liant 1 | | | PA6Ov | | 475/50/475 |
| 43 | PA11Choc | Liant 1 | | | PA6OvE | | 475/50/475 |
| | *couche externe* | *couches intermédiaires* | | | *couche interne* | | |
| 44 | PA11Cu | Liant 1 | Pua60 | | Liant 1 | | 475/50/325/150 |
| | *couche externe* | *couches intermédiaires* | | | *couche interne* | | |
| 45 | PA11Choc | Liant 1 | PA6Ov | Liant 1 | PA11-TL | | 225/50/450/50/225 |
| 46 | PA11Cu | Liant 1 | PA6Oy | Liant 1 | PA11-TL | | 225/50/450/50/225 |
| 47 | PA11Cu | Liant 1 | PPAb | Liant 1 | PA11-TL | | 390/50/120/50/390 |
| 48 | PA11 Cu | Liant 1 | amPASAa | Liant 1 | PA11-TL | | 390/50/120/50/390 |
| | *couche externe* | *Couche intermédiaire* | | | couche *interne* | | |
| 49 | PA11Cu | Liant 1 | | | PPAOvTL | | 475/50/475 |
| | *couche externe* | *Couche intermédiaire* | | | *couche interne* | | |
| 50 | Liant 4 | PA6Ov | | | Liant 1 | | 250/500/250 |
| 51 | Lian | PA6Ov | | | Liant 2 | | 250/500/250 |
| 52 | Liant 4 | PA6Oy | | | Liant 3 | | 250/500/250 |
| | *couche externe* | | | *couche interne* | | | |
| 53 | Liant 4 | | | PPAa | | | 500/500 |
| 54 | PA1210T-Cu | | | PPAa | | | 500/500 |
| | *couche externe* | | | *couche interne* | | | |
| 55 | PA11Cu | | | Liant 6 | | | 500/500 |
| | *couche externe* | *Couche intermédiaire* | | | *couche interne* | | |
| 56 | PA11Cu | Liant 1 | | | PA11-TL | | 475/50/475 |
| 57 | PA11Cu | Liant 6 | | | PA11-TL | | 475/50/475 |
| | *couche externe* | | | *couche interne* | | | |
| 58 | Liant 4 | | | Liant 1 | | | 500/500 |
| 59 | Liant 5 | | | Liant 6 | | | 500/500 |
| | *couche externe* | | | *couche interne* | | | |
| 60 | PA11 Cu | | | PA11-TL | | | 500/500 |
| 61 | PA11Choc | | | PA11-TL | | | 500/500 . |
| 62 | PA11 Cu | | | PA1210T-TL | | | 500/500 |
| 63 | PA1210T-Cu | | | PA1210T-TL | | | 500/500 |
| 64 | PA11 CCu | | | PA11-TL | | | 500/500 |
| 65 | _PA11 CCu | | | PA11 CTL | | | 500/500 |
| 66 | PA11 Choc | | | PA11 CTL | | | 500/500 |
| 67 | PA11 Choc | | | PA11 ChocTL | | | 500/500 |
| 68 | PA11 Cu | | | PA 11 CondTL | | | 950/50 |
| | *couche* externe | Couche *intermédiaire* | | | *Couche interne* | | |
| 69 | PA11Cu | PA11Choc | | | PA11CondTL | | 900/50/50 |
| | *couche externe* | | | | *couche interne* | | |
| 70 | PPAd | | | | PPAb | | |
| 71 | PA12-Cu | Liant 9 | | | | PA12-TL | 250/500/250 |
| 72 | PA12-Cu | Liant 10 | | | | PA12-TL | 250/500/250 |
| 73 | PA12-Cu | Liant 11 | | | | PA12-TL | 250/500/250 |
| 74 | PA12-Cu | Liant 12 | | | | PA12-TL | 250/500/250 |
| 75 | PA12-Cu | Liant 1 | EVOH | | PA6p1E | PPAb | 400/50/100/350/100 |
| 76 | -Cu | Liant 9 | EVOH 100 | | Liant 9 | PPAb | 250/200/100/350/100 |
| 77 | PA12-Cu | Liant 11 | EVOH | | PPAb | Liant 9 | 200/200/100/100/400 |
| | | | | | | | |
| 78 | PA12-Cu | Liant 1 | | PA6plE | | PPAb | 250/50/450/250 |
| 79 | PA12-Cu | Liant 1 | | PPAb | | PA6pIE | 350/50/200/400 |

**Tableau 2**

| Contre-exemples | | | | | | |
|---|---|---|---|---|---|---|
| Cx1 | PA12-Cu | | | | | Epaisseur en µm : 1000 |
| Cx2 | PA 11 Cu | | | | | 1000 |
| Cx3 | PA 11-TL | | | | | 1000 |
| Cx4 | PA11 CondTL | | | | | 1000 |
| Cx5 | PA 11 Choc | | | | | 1000 |
| Cx6 | PA11 CCu | | | | | 1000 |
| Cx7 | mélange 50:50 PA11CCu+PA11CTL | | | | | 1000 |
| Cx8 | Liant 1 | | | | | 1000 |
| Cx9 | Liant 2 | | | | | 1000 |
| Cx10 | Liant 4 | | | | | 1000 |
| Cx11 | Liant 5 | | | | | 1000 |
| Cx12 | PA6Ov | | | | | 1000 |
| Cx13 | PA6a | | | | | 1000 |
| Cx14 | PPAb | | | | | 1000 |
| Cx15 | PPAa | | | | | 1000 |
| | *couche externe* | *couches intermédiaires* | | | *couche interne* | |
| C16 | PA11-TL | Liant 1 | EVOH | | PA11-TL | 400/50/100/50/400 |
| Cx17 | PA11 Cu | Liant 1 | EVOH | Liant 1 Liant 1 | PA11 Cu | 400/50/100/SO/400 |
| | *couche externe* | *Couche intermédiaire* | | | *couche interne* | |
| Cx18 | PA11-TL | Liant 1 | | | PA6a | 475/50/475 |
| Cxl1 | PA11-TL | Liant 1 | | | PPAa | 475/50/475 |
| | | | | | | |
| Cx20 | PPAd | | | | | 1000 |

**Tableau 3**

| ex n° | Vieillissement oxydatif | Tenue Peroxyde | Adhésion | Barrière bioessence CE10 | Barrière Diesel | Tenue ZnCl2 | Flexibilité | Antistatique | T° de service |
|---|---|---|---|---|---|---|---|---|---|
| 1 | TB, 1100 | TB, > 1000 | >30 | très bonne, <30 | suffisant | TB | B | | |
| 2 | TB, 950 | TB, > 1000 | >30 | très bonne, <50 | suffisant | TB | B | | |
| 3 | TB, 975 | TB, > 1000 | >30 | très bonne, <50 | suffisant | TB | B | oui | |
| 4 | TB, 950 | TB, > 1000 | >30 | très bonne, <50 | suffisant | TB | B | oui | |
| 5 | TB, 700 | TB, > 1000 | >30 | très bonne, <30 | suffisant | TB | B | | |
| 6 | B, 600 | TB,>1000 | >30 | très bonne, <30 | suffisant | TB | B | | |
| 7 | B, 450 | TB, > 1000 | >30 | très bonne, <30 | suffisant | TB | B | | |
| 8 | TB, 850 | TB, > 1000 | >30 | très bonne, <30 | suffisant | TB | B | | |
| 9 | TB, 975 | TB, > 1000 | >30 | très bonne, <30 | suffisant | TB | B | | |
| 10 | TB 850 | TB, > 1000 | >30 | très bonne, <30 | suffisant | TB | B+ | | |
| 11 | B 475 | B, > 400 | >30 | très bonne, <30 | suffisant | TB | B | oui | |
| | | | | | | | | | |
| 12 | B 475 | B, > 400 | >30 | très bonne, <30 | suffisant | TB | B | oui | ' |
| 13 | TB, 750 | TB, > 1000 | >30 | très bonne, <30 | suffisant | TB | B+ | | |
| | | | | | | | | | |
| 14 | B, 650 | B, >400 | >30 | très bonne, <30 | suffisant | | | | |
| 15 | B, 575 | B, >400 | >30 | très bonne, <30 | suffisant | | | | |
| 16 | TB, 725 | B, >400 | >30 | très bonne, <30 | suffisant | M | B+ | | |
| 17 | TB, 775 | B, >400 | >30 | très bonne, <30 | suffisant | AB | AB | | |
| | | | | | | | | | |
| 18 | B, 400 | B, >400 | >30 | très bonne, <30 | suffisant | AB | | | |
| 19 | AB, 350 | B, >400 | >30 | très bonne, <30 | suffisant | AB | | | |
| | | | | | | | | | |
| 20 | TB, 1050 | B, >400 | >30 | très bonne, <30 | suffisant | M | AB | | |
| 21 | TB, 850 | B, >400 | >30 | bonne, <100 | suffisant | M | AB | | |
| | | | | | | | | | |
| 22 | AB, 375 | AB, > 200 | >30 | Médiocre, > 100 | suffisant | TM | B+ | | |
| 23 | TB, 800 | B, >400 | >30 | très bonne, <30 | suffisant | AB | AB | | |
| 24 | TB, 875 | B, >400 | >30 | très bonne, <30 | suffisant | AB | AB | | |
| 25 | TB, 725 | B, >400 | >30 | très bonne, <30 | suffisant | AB | AB | | > 200°C |
| | | | | | | | | | |
| 26 | AB, 325 | B, >400 | >30 | très bonne, <30 | suffisant | AB | | | |
| | | | | | | | | | |
| 27 | TB, 1100 | B, >400 | >30 | bonne, <100 | suffisant | M | B | | |
| 28 | TB, 900 | B, >400 | >30 | bonne, <100 | suffisant | M | B | | |
| 29 | TB, 850 | B, >400 | >30 | bonne,<100 | suffisant | M | B | | |
| 30 | TB, 950 | B, >400 | >30 | bonne, <100 | suffisant | M | B | | |
| 31 | TB, 1100 | B, >400 | >30 | bonne, <100 | suffisant | M | B | | |
| 32 | B, 675 | B, >400 | >30 | bonne, <100 | suffisant | M | B | | > 200°C |
| 33 | TB, 750 | B, >400 | >30 | bonne, <100 | suffisant | M | B | | |
| 34 | TB, 825 | B, >400 | >30 | | bonne, <100 | M | B | | |
| 35 | TB, 1000 | B, >400 | >30 | bonne, <100 | suffisant | M | B | | |
| 36 | B, 675 | B, >400 | >30 | bonne, <100 | suffisant | M | B | | |
| 37 | TB, 850 | B, >400 | >30 | bonne, <100 | suffisant | M | B | | |
| 38 | TB, 950 | B, >400 | >30 | bonne, <100 | suffisant | M | B | | |
| 39 | TB, 1000 | B, >400 | >30 | bonne, <100 | suffisant | M | B | | |
| 40 | TB, 1300 | B, >400 | >30 | bonne, <100 | suffisant | M | B+ | | |
| | | | | | | | | | |
| 41 | B, 550 | AB, > 200 | >30 | bonne, <100 | suffisant | M | B | | |
| | | | | | | | | | |
| 42 | TB, 1200 | B, >400 | >30 | bonne, <100 | suffisant | M | B | | |
| 43 | TB, 1450 | B, >400 | >30 | bonne, <100 | suffisant | M | B+ | | |
| | | | | | | | | | |
| 44 | TB, 1000 | B, >400 | >30 | bonne, <100 | suffisant | AB | B | | |
| | | | | | | | | | |
| 45 | TB, 1750 | TB, > 1000 | >30 | bonne, <100 | suffisant | TB | AB | | |
| 46 | TB, 1350 | TB, > 1000 | >30 | bonne, <100 | suffisant | TB | AB | | |
| 47 | TB, 1425 | TB, > 1000 | >30 | très bonne, <30 | suffisant | TB | AB | | |
| 48 | TB, 1225 | TB, > 1000 | >30 | très bonne, <30 | suffisant | TB | AB | | |
| 49 | TB. 1325 | B. >400 | >30 | très bonne, <30 | suffisant | AB | AB | | |
| | | | | | | | | | |
| 50 | AB. 325 | B. >400 | >30 | bonne. <100 | suffisant | AB | AB | | |
| 51 | AB. 200 | B. >400 | > 30 | bonne, <100 | suffisant | AB | AB | | |
| 52 | B. 475 | B. >400 | >30 | bonne, <100 | suffisant | AB | AB | | |
| | | | | | | | | | |
| 53 | AB, 375 | B, >400 | >30 | très bonne, <30 | suffisant | AB | M | | >200°C |
| 54 | TB, 700 | B, >400 | >30 | très bonne, <30 | suffisant | AB | M | | >220°C |
| | | | | | | | | | |
| 55 | B, 550 | B, >400 | >30 | bonne, <100 | suffisant | AB | B+ | | |
| | | | | | | | | | |
| 56 | TB, 1300 | TB, > 1000 | >30 | Médiocre, > 100 | suffisant | TB | B+ | | |
| 57 | TB, 1475 | TB, > 1000 | >30 | bonne, <100 | suffisant | TB | B+ | | |
| | | | | | | | | | |
| 58 | B, 450 | B, >400 | >30 | Médiocre, > 100 | suffisant | AB | B | | |
| 59 | B, 475 | B, >400 | >30 | bonne, <100 | suffisant | AB | B | | |
| | | | | | | | | | |
| 60 | TB, 1550 | TB, > 1000 | >30 | Médiocre, > 100 | suffisant | TB | B+ | | |
| 61 | TB+, 2350 | TB, > 1000 | >30 | Médiocre, > 100 | suffisant | TB | B+ | | |
| 62 | TB, 1150 | TB, > 1000 | >30 | Médiocre, > 100 | suffisant | TB | B+ | | |
| 63 | TB, 775 | TB, > 1000 | >30 | Médiocre, > 100 | suffisant | TB | B+ | | > 220°C |
| 64 | TB, 1200 | TB, > 1000 | >30 | Médiocre, > 100 | suffisant | TB | B+ | | |
| 65 | TB, 1750 | TB, > 1000 | >30 | Médiocre, > 100 | suffisant | TB | B+ | | |
| 66 | TB+, 2800 | TB, > 1000 | >30 | Médiocre, > 100 | suffisant | TB | B+ | | |
| 67 | TB+, 3100 | TB, > 1000 | >30 | Médiocre, > 100 | suffisant | TB | B+ | | |
| 68 | B, 625 | B, >400 | >30 | Médiocre, > 100 | suffisant | TB | B | oui | |
| | | | | | | | | | |
| 69 | TB, 925 | B, >400 | >30 | Médiocre, > 100 | suffisant | TB | B | oui | |
| 70 | B+, >400 | TB, >1000 | >30 | nc | suffisant | TB | M | | |
| 71 | B+, >400 | TB, >1000 | >30 | nc | suffisant | TB | M | | |
| 72 | B+, >400 | TB, >1000 | >30 | nc | suffisant | TB | M | | |
| 73 | B+, >400 | TB, >1000 | >30 | nc | suffisant | TB | M | | |
| 74 | B+, >400 | TB, >1000 | >30 | nc | suffisant | TB | M | | |
| 75 | B+, >400 | B, >400 | >30 | très bonne, <3 | suffisant | AB | M | | |
| 76 | B+, >400 | B, >400 | >30 | très bonne, <3 | suffisant | AB | M | | |
| 77 | B+, >400 | B, >400 | >30 | très bonne, <3 | suffisant | M | M | | |
| 78 | B+, >400 | B, >400 | >30 | très bonne, <30 | suffisant | AB | M | | |
| 79 | B+, >400 | AB, >200 | >30 | très bonne, <30 | suffisant | TM | M | | |

**Tableau 4**

| Contre-exemples | | | | | | | | |
|---|---|---|---|---|---|---|---|---|
| ex n° | Vieillissement oxydatif | Tenue Peroxyde | Adhésion | Barrière bioessence CE10 | Barrière Diesel | Tenue ZnCl2 | Flexibilité | Antistatique |
| Cx1 | TB, 1600 | TM, <100 | | Médiocre, > 100 | suffisant | | | |
| Cx2 | TB+, 2000 | M, <200 | | Médiocre, > 100 | suffisant | | | |
| Cx3 | B, 400 | TB, > 1000 | | Médiocre, > 100 | suffisant | | | |
| Cx4 | M, 175 | B, >400 | | | | | | |
| Cx5 | TB+,3100 | M, <200 | | Médiocre, > 100 | suffisant | | | |
| Cx6 | TB+,2100 | TM, <100 | | Médiocre, > 100 | suffisant | | | |
| Cx7 | TB, 1400 | TM, <100 | | Médiocre, > 100 | suffisant | | | |
| Cx8 | M, 110 | B, >400 | | Médiocre, > 100 | suffisant | | | |
| Cx9 | M, 125 | B, >400 | | | | | | |
| Cx10 | B, 550 | TM, <100 | | Médiocre, > 100 | suffisant | | | |
| Cx11 | | TM, < 100 | | | | | | |
| Cx12 | M, 150 | B, >400 | | bonne, <100 | suffisant | | | |
| Cx13 | TM, <75 | M, <200 | | | | | | |
| Cx14 | M, 175 . | B, >400 | | très bonne, <30 | suffisant | | | |
| Cx15 | M, <200 | B, >400 | | | | | | |
| Cx16 | AB, 350 | TB, > 1000 | | très bonne, <30 | suffisant | | | |
| Cx17 | TB, 900 | M, <200 | | très bonne; <30 | suffisant | | | |
| Cx18 | M, 120 | AB,> 200 | >30 | Médiocre, > 100 | suffisant | | | |
| Cx19 | M, 150 | B, >400 | >30 | très bonne, <30 | suffisant | | | |
| Cx20 | | TM, <100 | | très bonne, <30 | suffisant | | | |

**Tableau 5**

| **exmples annexe 1 n°** | **5** | **13** | **25** | **58** |
|---|---|---|---|---|
| | 5 couches | 4 couches | 3 couches | 2 couches |
| **Extrudeuse 1, interne** | **PA11 TL** | **PA6OYE** | **PA6OY** | **PA11-TL** |
| Z1,°C | 180 | 200 | 200 | 190 |
| Z2,°C | 200 | 220 | 220 | 240 |
| Z3,°C | 220 | 240 | 240 | 245 |
| Z4,°C | 230 | 240 | 240 | 250 |
| Z5,°C | 240 | 240 | 240 | 250 |
| Z6,°C | 240 | 240 | 240 | 250 |
| Z7,°C | 240 | 240 | 240 | 250 |
| Rotation vis, rpm | 28,3 | 35 | 28,3 | 26,2 |
| Couple, % | 38 | 24 | 28 | 30 |
| Pression, bar | 299 | 142 | 194 | 351 |

| **Extrudeuse 2** | **Liant 1** | **EVOH** | **PA6OY** | **PUA11-TL** |
|---|---|---|---|---|
| Z1,°C | 170 | 200 | 200 | 190 |
| Z2,°C | 190 | 220 | 220 | 240 |
| Z3,°C | 210 | 240 | 240 | 240 |
| Z4.°C | 240 | 240 | 240 | 240 |
| Z5,°C | 240 | 240 | 240 | 240 |
| Rotation vis, rpm | 17 | 32,5 | 30,3 | 56,7 |
| Couple, % | 33 | 28 | 18 | 52 |
| Pression, bar | 73 | 83 | 81 | 128 |

| **Extrudeuse 3** | **EVOH** | **PA11Cu** | **PA11Cu** | **PA11Cu** |
|---|---|---|---|---|
| Z1,°C | 170 | 190 | 200 | 190 |
| Z2,°C | 190 | 210 | 220 | 240 |
| Z3,°C | 210 | 230 | 240 | 240 |
| Z4,°C | 230 | 240 | 250 | 240 |
| Z5,°C | 240 | 240 | 250 | 240 |
| Z6,°C | 240 | 240 | 250 | 240 |
| Z7,°C | 240 | 240 | 250 | 240 |
| Rotation vis, rpm | 9,6 | 28,6 | 32,3 | 27,4 |
| Couple, % | 40 | 40 | 32 | 28 |
| Pression, bar | 97 | 281 | 100 | 130 |

| **Extrudeuse 4** | **Liant 1** | **Usant 1** | **Liant 1** | **PA11-TL** |
|---|---|---|---|---|
| Z1,°C | 190 | 190 | 200 | 190 |
| Z2,°C | 220 | 210 | 220 | 240 |
| Z3,°C | 230 | 230 | 240 | 240 |
| Z4.°C | 240 | 260 | 250 | 240 |
| Z5,°C | 240 | 260 | 270 | 240 |
| Rotation vis, rpm | 27 | 12,4 | 12,1 | 35,4 |
| Couple, % | 7 | 28 | 15 | 34 |
| Pression, bar | 22 | 85 | 84 | 212 |

| **Extrudeuse 5, externe** | **PA11Cu** | **PA11Cu** | **PA11Cu** | **PA11Cu** |
|---|---|---|---|---|
| Z1,°C | 170 | 190 | 200 | 190 |
| Z2,°C | 200 | 210 | 220 | 240 |
| Z3,°C | 220 | 220 | 240 | 240 |
| Z4,°C | 240 | 230 | 250 | 240 |
| Z5,°C | 240 | 240 | 250 | 240 |
| Z6,°C | 240 | 240 | 250 | 240 |
| Z7,°C | 240 | 240 | 250 | 240 |
| Rotation vis, rpm | 37,3 | 38,3 | 32,8 | 32,1 |
| Couple, % | 30 | 38 | 28 | 23 |
| . Pression, bar | 74 | 287 | 98 | 108 |
| **Tête de coextrusion** | | | | |
| Temp., °C | 240 | 260 | 260 | 250 |

| **Outillage** | | | | |
|---|---|---|---|---|
| Z1,°C | 240 | 260 | 260 | 250 |
| Z2,°C | 240 | 260 | 260 | 250 |
| Z3,°C | 230 | 260 | 260 | 250 |
| **Calibration** | | | | |
| diamètre calibre, mm | 9 | 8,85 | 9,5 | 9 |
| débit suintement, I/h | 36 | 36 | 44 - | |
| distance calibre-filière, mm | 60 | 35 | 30 | 70 |
| dépression, mbar | 100 | 80 | 50 | 120 |
| **Ligne** | | | | |
| Vitesse de ligne, m/min | 20 | 20 | 20 | 20 |

## Revendications

1. Structure multicouche comprenant au moins deux couches:
- une couche, dite interne, destinée à être en contact avec un fluide, constituée d'une composition comprenant majoritairement au moins un polyamide et au moins un stabilisant organique, et ne comprenant pas de cuivre, et
- une couche, dite externe, destinée à être en contact avec l'air, constituée d'une composition comprenant majoritairement au moins un polyamide et au moins un stabilisant à base de cuivre.

2. Structure selon la revendication 1, **caractérisée en ce que** la composition de la couche, dite interne, ne comprend en outre aucun autre métal de transition.

3. Structure selon la revendication 1 ou 2, **caractérisée en ce que** la composition constituant la couche, dite externe, comprend majoritairement au moins un polyamides fortement carboné, possédant un nombre moyen d'atomes de carbone par atome d'azote d'au moins 9, et de préférence d'au moins 10

4. Structure selon la revendication 3, **caractérisée en ce que** le polyamide est choisi parmi le PA11, le PA12, le PA10.10, le PA10.12, le PA6.18, le PA10.T, le coPA12/10.T, le coPA11/10.T et leurs mélanges.

5. Structure selon l'une quelconque des revendications précédentes, **caractérisée en ce que** le stabilisant à base de cuivre est choisi parmi les halogénures de cuivre, l'acétate de cuivre, les halogénures de cuivre ou l'acétate de cuivre en mélange avec au moins un halogénure de métal alcalin, et leurs mélanges, de préférence les mélanges d'iodure de cuivre et d'iodure de potassium (CuI/KI).

6. Structure selon l'une quelconque des revendications précédentes, **caractérisée en ce que** le stabilisant organique est choisi parmi les antioxydants phénoliques, les antioxydants de type amine, les stabilisants de type phosphite, les HALS, les absorbeurs UV et leurs mélanges.

7. Structure selon l'une quelconque des revendications précédentes, **caractérisée en ce qu'**elle comprend en outre au moins une couche barrière aux fluides automobiles, notamment aux carburants, constituée d'une composition comprenant au moins un polymère choisi parmi un copolymère EVOH, un polyamide ou un mélange de polyamides, ledit polyamide étant un polyamide faiblement carboné dont le nombre moyen d'atome de carbone par atome d'azote est inférieur à 9, et préférentiellement comprenant des motifs aromatiques.

8. Structure selon l'une quelconque des revendications précédentes, **caractérisée en ce qu'**elle comprend en outre au moins une couche de liant constituée d'une composition choisie parmi un mélange de copolyamides 6/12, une polyoléfine fonctionnalisée et un mélange d'un ou plusieurs polyamides avec une polyoléfine fonctionnalisée.

9. Structure selon l'une quelconque des revendications précédentes, **caractérisée en ce que** le ou les polyamides majoritaires présents dans les compositions constituant les couches présente une enthalpie de fusion supérieure ou égale à 25J/g (DSC), mesurée conformément à la norme iso 11 357.

10. Structure selon l'une quelconque des revendications précédentes, **caractérisée en ce que** le ou les polyamides majoritaires présents dans les compositions constituant les couches présente une température de fusion supérieure ou égale à 170°C.

11. Structure selon l'une quelconque des revendications 1 à 6, 9 et 10, **caractérisée en ce que** la structure consiste en :
- une couche, dite interne constituée d'une composition comprenant au moins un polyamide fortement carboné, comprenant un nombre moyen d'atomes de carbone par atome d'azote d'au moins 9 et un stabilisant organique et,
- une couche, dite externe constituée d'une composition comprenant au moins un polyamide fortement carboné, comprenant un nombre moyen d'atomes de carbone par atome d'azote d'au moins 9 et un stabilisant à base de cuivre.

12. Structure selon l'une quelconque des revendications 1 à 6 et 8 à 10, **caractérisée en ce que** la structure consiste en :
- une couche, dite interne constituée d'une composition comprenant au moins un polyamide possédant des motifs aromatique et un stabilisant organique,
- une couche intermédiaire de liant, tel que défini à la revendication 8, et
- une couche, dite externe constituée d'une composition comprenant au moins un polyamide fortement carboné, comprenant un nombre moyen d'atomes de carbone par atome d'azote d'au moins 9 et un stabilisant à base de cuivre.

13. Structure selon l'une quelconque des revendications précédentes, **caractérisée en ce qu'**elle se présente sous la forme d'un tube, d'un récipient, d'un film ou d'une plaque, de préférence d'un tube.

14. Utilisation de la structure telle que définie à l'une quelconque des revendications 1 à 13 pour le transport ou le stockage de fluides, en particulier présents dans les véhicules.

15. Utilisation selon la revendication 14, **caractérisée en ce que** le fluide est choisi parmi une huile, un liquide de frein, des solutions d'urée, des liquides de refroidissement à base de glycol, des carburants, et particulièrement des bio-carburants, et encore plus particulièrement les bio-diesels.

## Claims

1. Multilayer structure comprising at least two layers:
- a layer, referred to as the inner layer, intended to be in contact with a fluid, constituted of a composition predominantly comprising at least one polyamide and at least one organic stabilizer, and not comprising any copper, and
- a layer, referred to as the outer layer, intended to be in contact with air, constituted of a composition predominantly comprising at least one polyamide and at least one copper-based stabilizer.

2. Structure according to Claim 1, **characterized in that** the composition of the inner layer also does not comprise any other transition metal.

3. Structure according to Claim 1 or 2, **characterized in that** the composition constituting the outer layer predominantly comprises at least one high-carbon polyamide, having a mean number of carbon atoms per nitrogen atom of at least 9 and preferably of at least 10.

4. Structure according to Claim 3, **characterized in that** the polyamide is chosen from PA11, PA12, PA10.10, PA10.12, PA6.18, PA10.T, coPA12/10.T and coPA1 1/10.T, and mixtures thereof.

5. Structure according to any one of the preceding claims, **characterized in that** the copper-based stabilizer is chosen from copper halides, copper acetate, copper halides or copper acetate as a mixture with at least one alkali metal halide, and mixtures thereof, preferably mixtures of copper iodide and potassium iodide (CuI/KI).

6. Structure according to any one of the preceding claims, **characterized in that** the organic stabilizer is chosen from phenolic antioxidants, antioxidants of amine type, stabilizers of phosphite type, HALS and UV absorbers, and mixtures thereof.

7. Structure according to any one of the preceding claims, **characterized in that** it also comprises at least one motor vehicle fluid-barrier layer, which is especially a barrier to fuels, constituted of a composition comprising at least one polymer chosen from an EVOH copolymer, a polyamide or a mixture of polyamides, the said polyamide being a low-carbon polyamide in which the mean number of carbon atoms per nitrogen atom is less than 9, and preferentially comprising aromatic units.

8. Structure according to any one of the preceding claims, **characterized in that** it also comprises at least one binder layer constituted of a composition chosen from a mixture of copolyamides 6/12, a functionalized polyolefin and a mixture of one or more polyamides with a functionalized polyolefin.

9. Structure according to any one of the preceding claims, **characterized in that** the predominant polyamide(s) present in the compositions constituting the layers has a heat of fusion of greater than or equal to 25 J/g (DSC), measured in accordance with standard ISO 11357.

10. Structure according to any one of the preceding claims, **characterized in that** the predominant polyamide(s) present in the compositions constituting the layers has a melting point of greater than or equal to 170°C.

11. Structure according to any one of Claims 1 to 6, 9 and 10, **characterized in that** the structure consists of:
- a layer, referred to as the inner layer, constituted of a composition comprising at least one high-carbon polyamide comprising a mean number of carbon atoms per nitrogen atom of at least 9, and an organic stabilizer, and
- a layer, referred to as the outer layer, constituted of a composition comprising at least one high-carbon polyamide comprising a mean number of carbon atoms per nitrogen atom of at least 9 and a copper-based stabilizer.

12. Structure according to any one of Claims 1 to 6 and 8 to 10, **characterized in that** the structure consists of:
- a layer, referred to as the inner layer, constituted of a composition comprising at least one polyamide bearing aromatic units, and an organic stabilizer,
- an intermediate binder layer, as defined in Claim 8, and
- a layer, referred to as the outer layer, constituted of a composition comprising at least one high-carbon polyamide comprising a mean number of carbon atoms per nitrogen atom of at least 9, and a copper-based stabilizer.

13. Structure according to any one of the preceding claims, **characterized in that** it is in the form of a pipe, a container, a film or a plate, preferably a pipe.

14. Use of the structure as defined in any one of Claims 1 to 13, for transporting or storing fluids, in particular fluids present in vehicles.

15. Use according to Claim 14, **characterized in that** the fluid is chosen from an oil, a brake fluid, urea solutions, glycol-based coolant liquids, fuels, and particularly biofuels and even more particularly biodiesels.

## Patentansprüche

1. Mehrschichtstruktur mit mindestens zwei Schichten:
- einer als innere Schicht bezeichneten Schicht, die für den Kontakt mit einem Fluid bestimmt ist und aus einer Zusammensetzung besteht, die hauptsächlich mindestens ein Polyamid und mindestens einen organischen Stabilisator umfaßt und kein Kupfer umfaßt, und
- einer als äußere Schicht bezeichneten Schicht, die für den Kontakt mit Luft bestimmt ist und aus einer Zusammensetzung besteht, die hauptsächlich mindestens ein Polyamid und mindestens einen Stabilisator auf Kupferbasis umfaßt.

2. Struktur nach Anspruch 1, **dadurch gekennzeichnet, daß** die Zusammensetzung der als innere Schicht bezeichneten Schicht außerdem kein anderes Übergangsmetall umfaßt.

3. Struktur nach Anspruch 1 oder 2, **dadurch gekennzeichnet, daß** die Zusammensetzung, aus der die als äußere Schicht bezeichnete Schicht besteht, hauptsächlich mindestens ein kohlenstoffreiches Polyamid mit einer mittleren Zahl von Kohlenstoffatomen pro Stickstoffatom von mindestens 9 und vorzugsweise mindestens 10 umfaßt.

4. Struktur nach Anspruch 3, **dadurch gekennzeichnet, daß** das Polyamid unter PA 11, PA 12, PA 10.10, PA 10.12, PA 6.18, PA 10.T, CoPA 12/10.T, CoPA 11/10.T und Mischungen davon ausgewählt ist.

5. Struktur nach einem der vorhergehenden Ansprüche, **dadurch gekennzeichnet, daß** der Stabilisator auf Basis von Kupfer unter Kupferhalogeniden, Kupferacetat, Kupferhalogeniden oder Kupferacetat in Abmischung mit mindestens einem Alkalimetallhalogenid und Mischungen davon, vorzugsweise Mischungen von Kupferiodid und Kaliumiodid (CuI/KI) ausgewählt ist.

6. Struktur nach einem der vorhergehenden Ansprüche, **dadurch gekennzeichnet, daß** der organische Stabilisator unter phenolischen Antioxidantien, Antioxidantien vom Amin-Typ, Stabilisatoren vom Phosphit-Typ, HALS, UV-Absorbern und Mischungen davon ausgewählt ist.

7. Struktur nach einem der vorhergehenden Ansprüche, **dadurch gekennzeichnet, daß** sie außerdem mindestens eine Barriereschicht für Automobilfluide, insbesondere Kraftstoffe, umfaßt, die aus einer Zusammensetzung besteht, die mindestens ein unter einem EVOH-Copolymer, einem Polyamid oder einer Mischung von Polyamiden ausgewähltes Polymer umfaßt, wobei das Polyamid ein kohlenstoffarmes Polyamid mit einer mittleren Zahl von Kohlenstoffatomen pro Stickstoffatom von weniger als 9 ist und vorzugsweise aromatische Einheiten umfaßt.

8. Struktur nach einem der vorhergehenden Ansprüche, **dadurch gekennzeichnet, daß** sie außerdem mindestens eine Bindemittelschicht umfaßt, die aus einer unter einer Mischung von Copolymaiden 6/12, einem funktionalisierten Polyolefin und einer Mischung von einem oder mehreren Polyamiden mit einem funktionalisierten Polyolefin ausgewählten Zusammensetzung besteht.

9. Struktur nach einem der vorhergehenden Ansprüche, **dadurch gekennzeichnet, daß** das oder die in den die Schichten bildenden Zusammensetzungen vorliegenden hauptsächlichen Polyamide eine Schmelzenthalpie größer gleich 25 J/g (DSC), gemessen gemäß ISO-Norm 11 357, aufweisen.

10. Struktur nach einem der vorhergehenden Ansprüche, **dadurch gekennzeichnet, daß** das oder die in den die Schichten bildenden Zusammensetzungen vorliegenden hauptsächlichen Polyamide eine Schmelztemperatur größer gleich 170°C aufweisen.

11. Struktur nach einem der Ansprüche 1 bis 6, 9 und 10, **dadurch gekennzeichnet, daß** die Struktur aus:
- einer als innere Schicht bezeichneten Schicht, die aus einer Zusammensetzung besteht, die mindestens ein kohlenstoffreiches Polyamid mit einer mittleren Zahl von Kohlenstoffatomen pro Stickstoffatom von mindestens 9 und einen organischen Stabilisator umfaßt, und
- einer als äußere Schicht bezeichneten Schicht, die aus einer Zusammensetzung besteht, die mindestens ein kohlenstoffreiches Polyamid mit einer mittleren Zahl von Kohlenstoffatomen pro Stickstoffatom von mindestens 9 und einen Stabilisator auf Kupferbasis umfaßt,
besteht.

12. Struktur nach einem der Ansprüche 1 bis 6 und 8 bis 10, **dadurch gekennzeichnet, daß** die Struktur aus:
- einer als innere Schicht bezeichneten Schicht, die aus einer Zusammensetzung besteht, die mindestens ein Polyamid mit aromatischen Einheiten und einen organischen Stabilisator umfaßt,
- einer Bindemittelzwischenschicht gemäß Anspruch 8 und
- einer als äußere Schicht bezeichneten Schicht, die aus einer Zusammensetzung besteht, die mindestens ein kohlenstoffreiches Polyamid mit einer mittleren Zahl von Kohlenstoffatomen pro Stickstoffatom von mindestens 9 und einen Stabilisator auf Kupferbasis umfaßt,
besteht.

13. Struktur nach einem der vorhergehenden Ansprüche, **dadurch gekennzeichnet, daß** sie in Form eines Rohrs, eines Behälters, einer Folie oder einer Platte, vorzugsweise eines Rohrs, vorliegt.

14. Verwendung der Struktur gemäß einem der Ansprüche 1 bis 13 zum Transport oder zur Lagerung von Fluiden, insbesondere in Fahrzeugen vorliegenden Fluiden.

15. Verwendung nach Anspruch 14, **dadurch gekennzeichnet, daß** das Fluid unter einem Öl, einer Bremsflüssigkeit, Harnstofflösungen, Kühlflüssigkeiten auf Glykolbasis, Kraftstoffen und insbesondere Biokraftstoffen und noch weiter bevorzugt Biodieseln ausgewählt ist.
